# EUROPEAN PATENT APPLICATION

(11) **EP 4 838 948 A1**
(43) Date of publication of application: **11.11.2026**
(21) Application number: 25751103.0
(22) Date of filing: 15.01.2025
(51) Int. Cl.: H04W 28/06

(54) **COMMUNICATION METHOD AND APPARATUS**

(30) Priority: 08.02.2024 CN 202410177936
(71) Applicant: Huawei Technologies Co., Ltd., Shenzhen, Guangdong 518129 (CN)
(72) Inventor: ZHANG, Yanqing, Shenzhen, Guangdong 518129 (CN); YAO, Chuting, Shenzhen, Guangdong 518129 (CN); ZHANG, Mengchen, Shenzhen, Guangdong 518129 (CN); XU, Haibo, Shenzhen, Guangdong 518129 (CN)
(74) Representative: Pfenning, Meinig & Partner mbB
(86) International application number: PCT/CN2025/072568
(87) International publication number: WO 2025/167501

(57) **Abstract**

This application relates to a communication method and apparatus. The method includes: A first apparatus receives, at a first layer, a first data unit and a second data unit. The first data unit corresponds to a first number, the second data unit corresponds to a second number, and the second number is larger than the first number. When the first data unit is discarded, the first apparatus may send first information, where the first information may indicate that a data unit is discarded.

## Description

### CROSS-REFERENCE TO RELATED APPLICATIONS

This application claims priority to Chinese Patent Application No. 202410177936.5, filed with the China National Intellectual Property Administration on February 8, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A sending apparatus may allocate a number to a to-be-sent data unit, and include the number, for example, a sequence number (sequence number, SN), in the to-be-sent data unit. In this way, a receiving apparatus may process the data unit based on the number. However, to meet requirements such as delay requirements, the sending apparatus may discard some data units during transmission. For example, if a data unit remains in a buffer of the sending apparatus when a discard timer associated with the data unit expires, the sending apparatus may discard the data unit. An operation of discarding the data unit may cause a gap (gap) between numbers corresponding to data units on the receiving apparatus side, thereby affecting the processing of the received data units by the receiving apparatus.

### SUMMARY

This application provides a communication method and apparatus, to reduce impact on the processing of a data unit by a receiving apparatus.

According to a first aspect, this application provides a communication method. The method may be performed by a first apparatus. The first apparatus may be a terminal or a module (for example, a circuit or a chip) in the terminal, or may be a logical node, a logical module, or software that can implement all or part of functions of the terminal. The method may include: The first apparatus receives, at a first layer, a first data unit and a second data unit. The first data unit may correspond to a first number, the second data unit may correspond to a second number, and the second number may be larger than the first number. When the first data unit is discarded, the first apparatus may send first information, where the first information may indicate that a data unit is discarded.

According to the method, when the first data unit is discarded, the first apparatus may send the first information, where the first information may indicate that a data unit is discarded. In this way, a second apparatus that receives the first information may process a received data unit based on the first information, thereby avoiding or reducing impact on the processing of the received data unit by the second apparatus.

In a possible design, when the first data unit is discarded, the first apparatus may start or restart a first timer. When the first timer expires, the first apparatus may send the first information. According to this design, when the first data unit is discarded, the first apparatus may temporarily withhold sending of the first information. The first apparatus sends the first information only when the first timer expires. In this way, if a new data unit is discarded during running of the first timer, the first apparatus does not need to send one piece of first information for each discarded data unit, thereby reducing signaling overhead and saving transmission resources.

In a possible design, when the first timer expires, and there is no data unit corresponding to the first number within an entire duration of the first timer, the first apparatus may send the first information. According to this design, when the first data unit is discarded, the first apparatus may temporarily withhold sending of the first information. If a data unit corresponding to the first number exists in the first apparatus within the entire duration of the first timer, the first apparatus may withhold sending of the first information. If no data unit, corresponding to the first number exists in the first apparatus within the entire duration of the first timer, the first apparatus may send the first information when the first timer expires. In this way, the first apparatus may send the first information as required, thereby reducing signaling overhead and saving transmission resources.

In a possible design, the method may further include: The first apparatus may further receive a third data unit at the first layer. The third data unit may correspond to a third number, and the third number may be less than the second number and larger than the first number. When the third data unit is discarded, the first apparatus may send third information, where the third information may indicate that a data unit is discarded. In this way, each time a data unit is discarded, the first apparatus may send a piece of information indicating that a data unit is discarded, to notify the second apparatus in time that a data unit is discarded.

In a possible design, the first information may indicate that the first data unit is discarded. According to this design, the first apparatus may accurately indicate, via the first information, that the first data unit is discarded.

In a possible design, when the first data unit is discarded, and a quantity of discarded data units is larger than or equal to a first threshold, the first apparatus may send the first information. According to this design, when the first data unit is discarded, the first apparatus may temporarily withhold sending of the first information. The first apparatus sends the first information only when the quantity of discarded data units is larger than or equal to the first threshold. Therefore, a case in which one piece of first information is sent each time a data unit is discarded can be avoided, thereby reducing signaling overhead and saving transmission resources.

In a possible design, the method may further include: When the first information is submitted to a second layer, the first apparatus may start or restart a second timer. During running of the second timer, the first information is not submitted to the second layer. According to this design, within a specific duration after the first information is submitted to the second layer, the first apparatus does not trigger or send the first information, so that the first apparatus can be prevented from frequently triggering or sending the first information, thereby reducing signaling overhead and saving transmission resources.

Optionally, the second layer may be a radio link control (radio link control, RLC) layer.

In a possible design, when the first data unit is discarded, and the first data unit belongs to a first data unit set, the first apparatus may send the first information. Optionally, when the first data unit is discarded, and the first data unit belongs to the first data unit set, the first apparatus may send one single piece of first information for the first data unit set. In this way, the first apparatus does not need to send one piece of first information for each discarded data unit in the first data unit set, thereby reducing signaling overhead and saving transmission resources.

In a possible design, when the first data unit is discarded, and the second data unit is sent or to be sent, the first apparatus may send the first information. According to this design, the first apparatus sends the first information only when the first data unit is discarded and the second data unit is sent or to be sent, that is, when there is a gap between numbers of data units because the first data unit is discarded. It should be understood that, if all data units of the first apparatus are discarded, even if the first apparatus sends the first information, the second apparatus cannot process the received data unit based on the first information, and transmission resources are unnecessarily occupied. According to this design, a waste of resources can be avoided.

In a possible design, the first information may indicate a first count value, and the first count value may be determined based on the first number. According to this design, the first information can accurately indicate the first count value.

In a possible design, the first information may include a first header, the first header may include first indication information, and the first indication information may indicate that the first data unit is discarded. According to this design, the first apparatus can accurately indicate the first count value in time via the first information.

In a possible design, the first information may further include second indication information, and the second indication information may include a padding bit. When the second indication information is the padding bit, the first information may be a dummy packet. Therefore, in this design, the dummy packet may be sent to indicate that the first data unit is discarded, so that transmission resources can be saved.

In a possible design, the first number and the second number may be adjacent.

In a possible design, the first number and/or the second number may be a sequence number or a count value.

In a possible design, the first layer may include a packet data convergence protocol (packet data convergence protocol, PDCP) layer.

In a possible design, the first data unit and/or the second data unit may be a service data unit (service data unit, SDU) or a protocol data unit (protocol data unit, PDU).

According to a second aspect, this application provides a communication method. The method may be performed by a second apparatus. The second apparatus may be an access network device or a module (for example, a circuit or a chip) in the access network device, or may be a logical node, a logical module, or software that can implement all or part of functions of the access network device. The method may include: The second apparatus may receive first information, where the first information may indicate that a data unit is discarded. Then, the second apparatus may process a received data unit based on the first information.

According to the method, the first information may indicate that a data unit is discarded. In this way, the second apparatus that receives the first information may process the received data unit based on the first information, thereby avoiding or reducing impact on the processing of the received data unit by the second apparatus.

In a possible design, the first information may indicate that the M data units are discarded. The second apparatus may consider the discarded data units indicated by the first information as received, or may skip the discarded data units and process the received data unit. According to this design, impact on the processing of the received data unit by the second apparatus can be avoided or reduced.

In a possible design, the first information may indicate that the first data unit is discarded.

In a possible design, the first information may include a first header, the first header may include first indication information, and the first indication information may indicate that the first data unit is discarded.

In a possible design, the first information may further include second indication information, and the second indication information may include a padding bit.

In a possible design, the first information may indicate a first count value, and the first count value may be determined based on the first number. The second apparatus may update a count value #a to the first count value, and process the received data unit based on the count value #a. The count value #a may be a count value corresponding to a 1^{st} PDCP SDU that is not delivered to an upper layer of a PDCP layer. According to this design, impact on the processing of the received data unit by the second apparatus can be avoided or reduced.

According to a third aspect, this application provides a communication method. The method may be performed by a first apparatus. The first apparatus may be a terminal or a module (for example, a circuit or a chip) in the terminal, or may be a logical node, a logical module, or software that can implement all or part of functions of the terminal. The method may include: The first apparatus receives, at a first layer, a first data unit and a second data unit, where the first data unit corresponds to a first number, the second data unit corresponds to a second number, and the second number is larger than the first number. When the first data unit is discarded, the first apparatus triggers first information, where the first information indicates that a data unit is discarded.

According to the method, when the first data unit is discarded, the first apparatus may trigger the first information, where the first information may indicate that a data unit is discarded. In this way, a second apparatus that receives the first information may process a received data unit based on the first information, thereby avoiding or reducing impact on the processing of the received data unit by the second apparatus.

In a possible design, the first data unit is not submitted by a second layer to a lower layer of the second layer, and the second layer is a lower layer of the first layer.

In a possible design, the first layer includes a PDCP layer, and the second layer includes an RLC layer.

In a possible design, the method further includes: When a discard timer corresponding to the first data unit expires, the first apparatus discards the first data unit.

In a possible design, when the first data unit is discarded, the first apparatus triggers the first information, as follows: The first apparatus triggers the first information when the first data unit is discarded and the second data unit is not discarded.

In a possible design, a discard timer corresponding to the second data unit does not expire.

In a possible design, the first information indicates that M data units are discarded, the M data units include the first data unit, and M is a positive integer.

In a possible design, the first information indicates M numbers, and the M numbers are numbers corresponding to the M data units.

In a possible design, the first information includes a smallest number in the M numbers, or the first information includes a 1^{st} number in the M numbers.

In a possible design, when M is larger than 1, the first information further includes a first bitmap, a 1^{st} bit in the first bitmap corresponds to a next neighboring number of the 1^{st} number in the M numbers, and last M-1 numbers in the M numbers are determined based on bits whose values are a first value in the first bitmap.

In a possible design, the last M-1 numbers in the M numbers are determined based on the bits whose values are the first value in the first bitmap, as follows: When a value of a bit in the first bitmap is the first value, a data unit corresponding to the bit is discarded; and/or when a value of a bit in the first bitmap is a second value, a data unit corresponding to the bit is not discarded, where the first value and the second value are different.

In a possible design, bits in the first bitmap correspond, in ascending order of numbers, to the next neighboring number of the 1^{st} number in the M numbers and one or more subsequent numbers.

In a possible design, the method further includes: The first apparatus submits the first information to the lower layer of the first layer.

In a possible design, the first information indicates that the data unit is discarded, as follows: The first information indicates a first count value, and the first count value is determined based on the first number.

In a possible design, the first data unit and/or the second data unit is an SDU or a PDU.

According to a fourth aspect, this application provides a communication method. The method may be performed by a second apparatus. The second apparatus may be an access network device or a module (for example, a circuit or a chip) in the access network device, or may be a logical node, a logical module, or software that can implement all or part of functions of the access network device. The method may include: The second apparatus receives first information, where the first information indicates that a data unit is discarded; and the second apparatus determines the discarded data unit based on the first information.

In a possible design, the first information indicates that M data units are discarded, and M is a positive integer.

In a possible design, the first information indicates M numbers, and the M numbers are numbers corresponding to the M data units.

In a possible design, the first information includes a smallest number in the M numbers, or the first information includes a 1^{st} number in the M numbers.

In a possible design, when M is larger than 1, the first information further includes a first bitmap, a 1^{st} bit in the first bitmap corresponds to a next neighboring number of the 1^{st} number in the M numbers, and last M-1 numbers in the M numbers are determined based on bits whose values are a first value in the first bitmap.

In a possible design, the last M-1 numbers in the M numbers are determined based on the bits whose values are the first value in the first bitmap, as follows: When a value of a bit in the first bitmap is the first value, a data unit corresponding to the bit is discarded; and/or when a value of a bit in the first bitmap is a second value, a data unit corresponding to the bit is not discarded, where the first value and the second value are different.

In a possible design, the method further includes: When a value of a first variable is less than or equal to a largest count value corresponding to the M data units, the second apparatus updates the value of the first variable to the largest count value corresponding to the M data units plus 1, where the first variable indicates a count value corresponding to a next expected data unit to be received.

In a possible design, the method further includes: When a value of a second variable is equal to a second count value, the second apparatus delivers at least one data unit starting from a count value #a+1 to an upper layer of a third layer, where the second variable indicates a smallest count value in count values corresponding to data units that are not delivered to the upper layer of the third layer and are still waiting to be received, the second count value is a count value corresponding to one of the M data units, one or more numbers of the at least one data unit are consecutive, and the at least one data unit includes: a data unit in a reception buffer, and/or all or part of the M data units.

In a possible design, the method further includes: The second apparatus updates the value of the second variable to a third count value, where the third count value is a smallest count value corresponding to a data unit in a data unit set #1, any data unit in the data unit set #1 is not submitted to the upper layer of the third layer and does not belong to the M data units, and a count value corresponding to any data unit in the data unit set #1 is larger than the value of the second variable before update.

In a possible design, the third layer includes a PDCP layer.

According to a fifth aspect, this application provides a communication apparatus. The communication apparatus may be a terminal or a module (for example, a circuit or a chip) in the terminal, or may be a logical node, a logical module, or software that can implement all or part of functions of the terminal. The communication apparatus has a function of implementing the first aspect or the third aspect. For example, the communication apparatus includes a corresponding module, unit, or means for performing the operations in the first aspect or the third aspect. The module, unit, or means may be implemented by software, may be implemented by hardware, or may be implemented by hardware executing corresponding software.

In a possible design, the communication apparatus is configured to implement the method according to any one of the possible designs in the first aspect or the third aspect.

Further, the communication apparatus includes user equipment (user equipment, UE) or a chip. The user equipment may also be referred to as a terminal.

In a possible design, the communication apparatus includes a processing unit and an interface unit. The interface unit may receive/send a signal, to implement communication between the communication apparatus and another apparatus. The processing unit may perform some internal operations of the communication apparatus. Functions performed by the processing unit and the interface unit may correspond to the operations in the first aspect or the third aspect.

In a possible design, the communication apparatus includes a processor, and the processor may be coupled to a memory. The memory may store a necessary computer program or necessary instructions for implementing the functions in the first aspect or the third aspect. The processor may execute the computer program or the instructions stored in the memory. When the computer program or the instructions are executed, the communication apparatus is caused to implement the method according to any one of the possible designs in the first aspect or the third aspect.

In a possible design, the communication apparatus includes a processor and a memory. The memory may store a necessary computer program or necessary instructions for implementing the functions in the first aspect or the third aspect. The processor may execute the computer program or the instructions stored in the memory. When the computer program or the instructions are executed, the communication apparatus is caused to implement the method according to any one of the possible designs in the first aspect or the third aspect.

In a possible design, the communication apparatus includes a processor and an interface circuit. The processor is configured to communicate with another apparatus through the interface circuit, and perform the method according to any one of the possible designs in the first aspect or the third aspect.

According to a sixth aspect, this application provides a communication apparatus. The communication apparatus may be an access network device or a module (for example, a circuit or a chip) in the access network device, or may be a logical node, a logical module, or software that can implement all or part of functions of the access network device. The communication apparatus has a function of implementing the second aspect or the fourth aspect. For example, the communication apparatus includes a corresponding module, unit, or means for performing the operations in the second aspect or the fourth aspect. The module, unit, or means may be implemented by software, may be implemented by hardware, or may be implemented by hardware executing corresponding software.

In a possible design, the communication apparatus is configured to implement the method according to any one of the possible designs in the second aspect or the fourth aspect.

Further, the communication apparatus includes a network device or a chip.

Further, the network device includes an access network device.

In a possible design, the communication apparatus includes a processing unit and an interface unit. The interface unit may receive/send a signal, to implement communication between the communication apparatus and another apparatus. The processing unit may perform some internal operations of the communication apparatus. Functions performed by the processing unit and the interface unit may correspond to the operations in the second aspect or the fourth aspect.

In a possible design, the communication apparatus includes a processor, and the processor may be coupled to a memory. The memory may store a necessary computer program or necessary instructions for implementing the functions in the second aspect or the fourth aspect. The processor may execute the computer program or the instructions stored in the memory. When the computer program or the instructions are executed, the communication apparatus is caused to implement the method according to any one of the possible designs in the second aspect or the fourth aspect.

In a possible design, the communication apparatus includes a processor and a memory. The memory may store a necessary computer program or necessary instructions for implementing the functions in the second aspect or the fourth aspect. The processor may execute the computer program or the instructions stored in the memory. When the computer program or the instructions are executed, the communication apparatus is caused to implement the method according to any one of the possible designs in the second aspect or the fourth aspect.

In a possible design, the communication apparatus includes a processor and an interface circuit. The processor is configured to communicate with another apparatus through the interface circuit, and perform the method according to any one of the possible designs in the second aspect or the fourth aspect.

It may be understood that in the fifth aspect or the sixth aspect, the processor may be implemented by hardware or may be implemented by software. When implemented by hardware, the processor may be a logic circuit, an integrated circuit, or the like. When implemented by software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated on a same chip, or may be separately disposed on different chips. A type of the memory and a manner of disposing the memory and the processor are not limited in embodiments of this application.

According to a seventh aspect, this application provides a communication system. The communication system may include the communication apparatus according to the fifth aspect and the communication apparatus according to the sixth aspect. For example, the communication system includes a terminal and an access network device. The terminal performs the communication method provided in the first aspect, and the access network device performs the communication method provided in the second aspect; or the terminal performs the communication method provided in the third aspect, and the access network device performs the communication method provided in the fourth aspect.

According to an eighth aspect, this application provides a computer-readable storage medium, where the computer-readable storage medium stores computer-readable instructions; and when the computer-readable instructions are run, the method according to any one of the possible designs of any one of the first aspect to the fourth aspect is implemented.

According to a ninth aspect, this application provides a computer program product, where the computer program product includes computer program instructions or code; and when the computer program instructions or the code is run, the method according to any one of the possible designs of any one of the first aspect to the fourth aspect is implemented.

According to a tenth aspect, this application provides a chip. The chip reads a computer program stored in a memory, to perform the method according to any one of the possible designs of any one of the first aspect to the fourth aspect.

For technical effects that can be achieved in any one of the second aspect to the tenth aspect, refer to the descriptions of the technical effects that can be achieved in any one of the possible designs of the first aspect. No repeated descriptions are provided.

### BRIEF DESCRIPTION OF DRAWINGS

FIG. 1 is a diagram of an architecture of a communication system according to an embodiment of this application;
FIG. 2A and FIG. 2B are diagrams of several application scenarios according to an embodiment of this application;
FIG. 3 is a flowchart of a communication method according to an embodiment of this application;
FIG. 4A to FIG. 4J are diagrams of several types of first information according to an embodiment of this application;
FIG. 5 is a diagram of a structure of a communication apparatus according to an embodiment of this application; and
FIG. 6 is a diagram of a structure of another communication apparatus according to an embodiment of this application.

### DESCRIPTION OF EMBODIMENTS

The following describes the technical solutions in embodiments of this application with reference to the accompanying drawings in embodiments of this application. The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi or WiFi) system, a 4th generation (4th generation, 4G) mobile communication system such as a long term evolution (long term evolution, LTE) system, a 5th generation (5th generation, 5G) mobile communication system such as a new radio (new radio, NR) system, and a future evolved communication system such as a sixth generation (6th generation, 6G) mobile communication system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

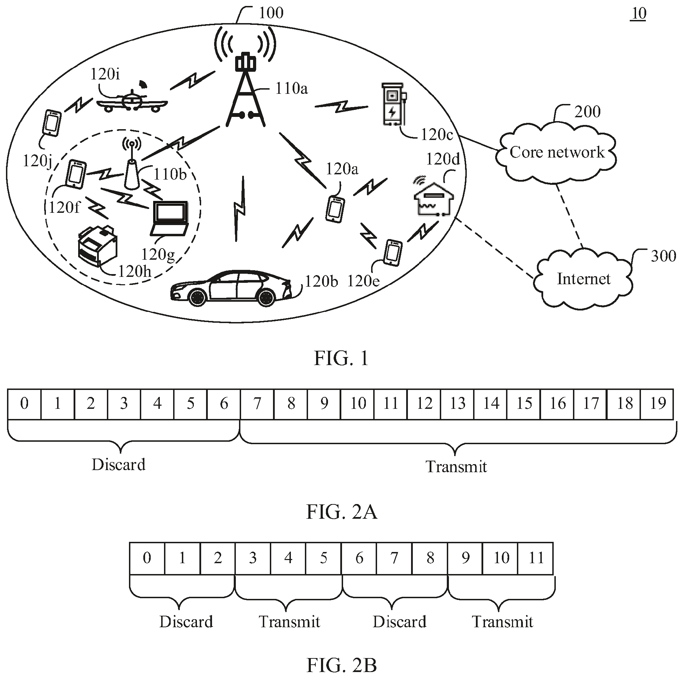

For ease of understanding embodiments of this application, FIG. 1 is a diagram of a possible and non-limiting system. As shown in FIG. 1, a communication system 10 includes a radio access network (radio access network, RAN) 100 and a core network (core network, CN) 200. Optionally, the communication system 10 may further include an internet 300.

The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a logical function of the core network and a logical function of the radio access network.

The RAN 100 may be a cellular system related to the 3rd generation partnership project (3rd generation partnership project, 3GPP), for example, a 4G mobile communication system, a 5G mobile communication system, or a future-oriented evolved system (for example, a 6G mobile communication system). The RAN 100 may alternatively be an open radio access network (open RAN, O-RAN or ORAN), a cloud radio access network (cloud radio access network, CRAN), or a Wi-Fi system. The RAN 100 may alternatively be a communication system that integrates two or more of the foregoing systems.

The RAN node 110 may also be sometimes referred to as a RAN entity, an access node, or the like, and forms a part of the communication system, to help a terminal implement radio access. A plurality of RAN nodes 110 in the communication system 10 may be nodes of a same type, or may be nodes of different types. In some scenarios, roles of the RAN node 110 and the terminal 120 are relative. For example, a network element 120i in FIG. 1 may be a helicopter or an uncrewed aerial vehicle, and may be configured as a mobile base station. For the terminal 120j that accesses the RAN 100 via the network element 120i, the network element 120i is a base station. However, for a base station 110a, the network element 120i is a terminal. Sometimes, both the RAN node 110 and the terminal 120 are referred to as communication apparatuses. For example, the network elements 110a and 110b in FIG. 1 may be understood as communication apparatuses having a base station function, and the network elements 120a to 120j may be understood as communication apparatuses having a terminal function.

The RAN node may further have different expressions, for example, an access network device. In this application, unless otherwise specified, the access network device is used hereinafter.

In a possible scenario, the access network device may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The access network device may be a macro base station (for example, 110a in FIG. 1), a micro base station or an indoor station (for example, 110b in FIG. 1), a relay node or a donor node, or a radio controller in a CRAN scenario. Optionally, the access network device may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or part of functions of the access network device in this application may alternatively be implemented through a software function running on hardware, or may be implemented through a virtualization function instantiated on a platform (for example, a cloud platform). The access network device in this application may alternatively be a logical node, a logical module, or software that can implement all or part of the functions of the access network device.

In another possible scenario, a plurality of access network devices cooperate to assist the terminal in implementing radio access, and different access network devices respectively implement some functions of the base station. For example, the access network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communications (machine-type communications, MTC), internet of things (internet of things, IOT), virtual reality, augmented reality, industrial control, autonomous driving, telemedicine, smart grid, smart furniture, smart office, smart wearables, smart transportation, and smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

In the following descriptions of this application, "sending information to a device (for example, a terminal)" may be understood as that a destination end of the information is the device, and may include directly or indirectly sending the information to the device. "Receiving information from a device (for example, a terminal)" may be understood as that a source of the information is the device, and may include directly or indirectly receiving the information from the device. Information may undergo necessary processing, for example, a format change, between a source end for sending the information and a destination end. However, the destination end may understand valid information from the source end. Similar descriptions in this application may be construed in a similar manner, and details are not described herein again.

The communication system and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The following first describes related terms in embodiments of this application. It should be noted that the descriptions are intended to make embodiments of this application easier to understand, but should not be construed as a limitation on the protection scope claimed in this application.

### 1. Data

In this application, a unit of data may be one of the following: an SDU, a PDU, a protocol data unit set (PDU set), or a data burst (data burst). The PDU may include the SDU and a header of a layer corresponding to the PDU. For example, a PDCP PDU may include a PDCP SDU and a PDCP header. The PDU set may include at least one PDU, and each PDU may carry an information unit generated by an application (or an application layer). For example, when a data amount of a data frame is large, the data frame may be divided into a plurality of PDUs for transmission, and the PDU set may include the plurality of PDUs. The data burst may be understood as a set of PDUs generated and sent by an application (or an application layer) within a period of time. The set of PDUs may come from one or more PDU sets, and a duration of the period of time may be less than a specified value.

Optionally, in this application, the data unit may be an SDU (for example, a PDCP SDU) or a PDU (PDCP PDU). The PDCP PDU may be a PDCP data PDU.

### 2. Processing of data by a sending apparatus

Entities, corresponding to a plurality of layers, in the sending apparatus may sequentially process data. For example, an entity corresponding to a service data adaptation protocol (service data adaptation protocol, SDAP) layer (which may be referred to as a first SDAP entity) in the sending apparatus may map data in a quality of service (quality of service, QoS) flow form to a corresponding data radio bearer (data radio bearer, DRB), to obtain a PDCP SDU, and submit (submit) the PDCP SDU to a PDCP layer that is in the sending apparatus. An entity corresponding to the PDCP layer (which may be referred to as a first PDCP entity) in the sending apparatus may generate a PDCP PDU based on the PDCP SDU, and submit the PDCP PDU to a lower layer of the PDCP layer (submit to lower layer(s)). The lower layer may be located in the sending apparatus, and the lower layer is, for example, an RLC layer. An entity corresponding to the RLC layer (which may be referred to as a first RLC entity) in the sending apparatus may process the PDCP PDU to obtain an RLC PDU, and submit the RLC PDU to a media access control (media access control, MAC) layer that is in the sending apparatus. The following describes some processing manners of the first PDCP entity that is in the sending apparatus.

### (1) Configure and start a discard timer for the PDCP SDU:

After receiving each PDCP SDU, the first PDCP entity may configure and start a discard timer for the PDCP SDU. In other words, each PDCP SDU may correspond to a discard timer. Because a PDCP PDU may include a PDCP SDU and a PDCP header, each PDCP PDU may also correspond to a discard timer. If a PDCP SDU or a PDCP PDU including the PDCP SDU is still in a buffer of the sending apparatus when a discard timer associated with the PDCP SDU expires, the sending apparatus may discard the PDCP SDU or the PDCP PDU including the PDCP SDU. For example, after receiving a PDCP SDU #1, the first PDCP entity may start, for the PDCP SDU #1, a discard timer #1 associated with the PDCP SDU #1. If the PDCP SDU #1 is still in the buffer of the sending apparatus when the discard timer #1 expires, the sending apparatus may discard the PDCP SDU #1. For another example, after receiving a PDCP SDU #1, the first PDCP entity may start, for the PDCP SDU #1, a discard timer #1 associated with the PDCP SDU #1. If a PDCP PDU including the PDCP SDU #1 is still in the buffer of the sending apparatus when the discard timer #1 expires, the sending apparatus may discard the PDCP PDU including the PDCP SDU #1.

Optionally, durations of discard timers corresponding to different PDCP SDUs may be different. For example, for a service such as an XR service, there may be a dependency relationship between data frames. For example, a 2^{nd} data frame may need to be encoded or decoded depending on a 1^{st} data frame. Therefore, if data transmission of the 1^{st} data frame fails, even if the 2^{nd} data frame is received, a receiving apparatus cannot decode the 2^{nd} data frame. For this characteristic of a service like an XR service, a concept of data importance is introduced. For example, data frames of the service like the XR service may be classified into an important data frame and an unimportant data frame by using a PDU set importance (PDU set importance, PSI) indication. If an access network device configures a timer (referred to as a discard timer #a below) for the first PDCP entity by using higher layer signaling: discard timer for low importance (discardTimerForLowImportance), and indicates to activate (or start) importance-based packet discard, the first PDCP entity may configure and start a regular discard timer (referred to as a discard timer #b below) for a PDCP SDU of an important data frame, and configure and start the discard timer #a for a PDCP SDU of an unimportant data frame, where a duration of the discard timer #a may be less than a duration of the discard timer #b. For example, if a 2^{nd} PDCP SDU is unimportant data or belongs to an unimportant data unit set, and a 1^{st} PDCP SDU is important data or belongs to an important data unit set, after receiving the 1^{st} PDCP SDU, the first PDCP entity may associate the 1^{st} PDCP SDU with the discard timer #b and start the discard timer #b; and after receiving the 2^{nd} PDCP SDU, the first PDCP entity may associate the 2^{nd} PDCP SDU with the discard timer #a and start the discard timer #a. For example, the importance-based packet discard may be activated or deactivated by the access network device through a MAC control element (MAC control element, MAC CE). Optionally, the importance-based packet discard may be configured by using a DRB as a granularity.

In some implementations, if packet discard at a granularity of a data unit set, for example, a PDU set, is configured for the sending apparatus, when a discard timer corresponding to any PDCP SDU in the PDU set expires, the sending apparatus may discard all data units in the PDU set. For example, the PDU set includes a PDCP SDU #1 to a PDCP SDU #4. When a discard timer corresponding to any one of the PDCP SDU #1 to the PDCP SDU #4 expires, for example, a discard timer associated with a 1^{st} SDU that arrives at the first PDCP entity expires, the sending apparatus may discard the PDCP SDU #1 to the PDCP SDU #4. For example, the packet discard at the granularity of a data unit set may be configured by the access network device for the first PDCP entity of the sending apparatus (for example, a terminal) via an RRC message (for example, PDU set discard (pdu-SetDiscard)).

### (2) Allocate a count (COUNT) value to the PDCP SDU:

After receiving each PDCP SDU, the first PDCP entity may allocate one count value to the PDCP SDU. In other words, each PDCP SDU may correspond to one count value. Because a PDCP PDU may include a PDCP SDU and a PDCP header, each PDCP PDU may also correspond to one count value. The count value may include an SN and a hyper frame number (hyper frame number, HFN). The SN may be sent along with data, and the HFN may be a locally maintained variable. Therefore, after receiving the SN, the receiving apparatus may determine the HFN based on the SN, to determine the count value.

Each PDCP SDU may correspond to a unique count value and a unique SN. The first PDCP entity may allocate the count value and the SN to the PDCP SDU through the following step A1 and step A2:
**Step A1:** After receiving a PDCP SDU, the first PDCP entity may use a variable TX_NEXT as a count value of the PDCP SDU, and may use A least significant bits of the variable TX_NEXT as an SN of the PDCP SDU, where A is a positive integer. For example, if a length of the SN is configured as 18 bits, the first PDCP entity may use 18 least significant bits (which may also be referred to as 18 least significant bits) of the variable TX_NEXT as the SN of the PDCP SDU. For another example, if a length of the SN is configured as 12 bits, the first PDCP entity may use 12 least significant bits (which may also be referred to as 12 least significant bits) of the variable TX_NEXT as the SN of the PDCP SDU.
**Step A2:** The first PDCP entity may increment the variable TX_NEXT by one.

Optionally, after operations such as header compression (if header compression is configured to be performed), integrity protection, and ciphering are performed on the PDCP PDU, the first PDCP entity may increment the variable TX_NEXT by one.

For a next PDCP SDU, the first PDCP entity may repeat step A1 and step A2, until count values and SNs are allocated to all PDCP SDUs.

Optionally, in the method shown in step A1 and step A2, an initial value of the variable TX_NEXT may be 0.

### (3) Allocate a count value corresponding to a discarded PDCP SDU to a subsequent PDCP SDU:

After discarding a PDCP SDU, the first PDCP entity may allocate a count value corresponding to the discarded PDCP SDU to another PDCP SDU.

In some examples, the first PDCP entity may set a count value corresponding to a PDCP SDU subsequently received from an upper layer of the PDCP layer to the count value corresponding to the discarded PDCP SDU. For example, a count value corresponding to a PDCP SDU #1 is 0, and a count value corresponding to a PDCP SDU #2 is 1. After discarding the PDCP SDU #1, the first PDCP entity may set the count value corresponding to the PDCP SDU #2 to 0. Optionally, the modification/setting operation may be performed before the first PDCP entity performs ciphering and integrity protection on a subsequent PDCP SDU. If the modification/setting operation is performed after the first PDCP entity performs ciphering and integrity protection on the subsequent PDCP SDU, complexity is higher.

In some other examples, the first PDCP entity may allocate a count value corresponding to a discarded PDCP SDU to a count value corresponding to a subsequently newly received PDCP SDU. For example, the first PDCP entity first receives a PDCP SDU #1 and a PDCP SDU #2. A count value corresponding to the PDCP SDU #1 is 0, and a count value corresponding to the PDCP SDU #2 is 1. After discarding the PDCP SDU #1, the first PDCP entity may allocate the count value 0 to a newly received PDCP SDU #3, that is, a count value corresponding to the PDCP SDU #3 is 0.

### (4) Perform header compression, integrity protection, and ciphering:

Header compression in an NR system may be usually based on a robust header compression (RObust header compression, ROHC) framework defined by the internet engineering task force (internet engineering task force, IETF) request for comments (request for comments, RFC). If the sending apparatus is a terminal, and the first PDCP entity is a PDCP entity that processes user plane data, the first PDCP entity may perform header compression.

An integrity protection function may include integrity protection and integrity verification. Integrity protection is to protect a PDCP PDU header and a data part before ciphering that are in a PDCP PDU. Integrity protection may be applied to PDCP data PDUs, but is usually not applied to PDCP control PDUs. After the integrity protection function is activated, the first PDCP entity may obtain, through calculation based on an integrity protection algorithm, a message authentication code for integrity (message authentication code for integrity, MAC-I) of each PDCP PDU corresponding to the PDCP entity, and fill a MAC-I field corresponding to the PDCP PDU with the MAC-I. In this way, a corresponding PDCP entity in the receiving apparatus may perform verification on integrity of the PDCP PDU based on information in the MAC-I field.

A function of ciphering is to ensure that after information is intercepted by a non-target receiving apparatus, the non-target receiving apparatus cannot obtain content of the information, thereby protecting data privacy. After a ciphering function is activated, the first PDCP entity may cipher a corresponding PDCP data PDU based on a count value (for example, TX_NEXT) corresponding to each PDCP SDU, and a ciphering algorithm and a key that are specified by an upper layer. In this way, the corresponding PDCP entity in the receiving apparatus may perform deciphering based on a count value of the received PDCP data PDU, and the ciphering algorithm and the key that are specified by the upper layer. Usually, the ciphering function may not be applied to PDCP control PDUs.

### 3. Processing of data by a receiving apparatus

Entities, corresponding to a plurality of layers, in the receiving apparatus may sequentially process data. For example, an entity corresponding to a PDCP layer (which may be referred to as a second PDCP entity) in the receiving apparatus may receive a PDCP PDU from an entity corresponding to an RLC layer (which may be referred to as a second RLC entity) in the receiving apparatus, and determine a corresponding count value based on an SN corresponding to the received PDCP PDU. Then, the second PDCP entity may perform deciphering and integrity verification based on the count value corresponding to the PDCP PDU. If the integrity verification fails, the second PDCP entity may discard the PDCP PDU. If the integrity verification succeeds, the second PDCP entity may determine whether to store, in a reception buffer, a PDCP SDU extracted from the received PDCP PDU, and may determine, based on the count value corresponding to the PDCP PDU, whether the PDCP SDU in the reception buffer can be delivered to an upper layer of the PDCP layer (deliver to upper layer(s)). The upper layer may be located in the receiving apparatus, and the upper layer is, for example, an SDAP layer. The following describes some processing manners of the second PDCP entity.
(1) Determine the corresponding count value based on the SN (which may be represented as RCVD_SN) corresponding to the received PDCP PDU:
   The second PDCP entity may determine, in the following manner, an HFN (which may be represented as RCVD_HFN) corresponding to the received PDCP PDU:
   If RCVD_SN < SN(RX_DELIV) - Window_Size, the second PDCP entity may determine that RCVD_HFN = HFN(RX_DELIV) + 1.
   If RCVD_SN >= SN(RX_DELIV) + Window_Size, the second PDCP entity may determine that RCVD_HFN = HFN(RX_DELIV) - 1.
   If SN(RX_DELIV) - Window_Size =< RCVD_SN < SN(RX_DELIV) + Window_Size, the second PDCP entity may determine that RCVD_HFN = HFN(RX_DELIV).

Then, the second PDCP entity may determine, based on the SN and the HFN that correspond to the received PDCP PDU, the count value corresponding to the received PDCP PDU. For example, the second PDCP entity may determine that the count value corresponding to the received PDCP PDU is RCVD_COUNT = [RCVD_HFN, RCVD_SN].

SN(RX_DELIV) may be an SN corresponding to a variable RX_DELIV maintained in the receiving apparatus, and HFN(RX_DELIV) may be an HFN value corresponding to the variable RX_DELIV. For specific content of the variable RX_DELIV, refer to the following descriptions of the variable RX_DELIV, and details are not described herein. The window size (Window_Size) is a constant, indicating a size of a reordering window. Window_Size is half of an SN value space. For example, if a bit width (or referred to as a length, for example, a quantity of bits) of the SN is 12, Window_Size is 2048. For another example, if a bit width of the SN is 18, Window_Size is 131072. Z = [X, Y] may be understood as concatenating X and Y, for example, appending Y to X. A bit width of Z may be a sum of a bit width of X and a bit width of Y.

(2) Determine whether to store, in the reception buffer, the PDCP SDU extracted from the received PDCP PDU:
The PDCP PDU received by the second PDCP may include a PDCP PDU #1. The following uses the PDCP PDU #1 as an example to describe how the second PDCP entity determines whether the PDCP SDU extracted from the received PDCP PDU can be stored in the reception buffer.

If a count value corresponding to the PDCP PDU #1 is less than a count value #a, the second PDCP entity may determine not to store, in the reception buffer, the PDCP SDU extracted from the PDCP PDU #1, and discard the PDCP PDU #1. The count value #a may be a count value corresponding to a 1^{st} PDCP SDU that is not delivered to the upper layer of the PDCP layer, the count value #a may be a count value corresponding to a PDCP SDU that is not delivered to the upper layer of the PDCP layer and that is still waiting to be received, or the count value #a may be a smallest count value in count values corresponding to PDCP SDUs that are not delivered to the upper layer of the PDCP layer and that are still waiting to be received. In other words, the count value #a may be a lower boundary of the reordering window, that is, a smallest count value in the reordering window. The count value #a may be recorded by the second PDCP entity by using the variable RX_DELIV. An initial value of the variable RX_DELIV may be 0. For example, if the second PDCP entity delivered PDCP SDUs whose count values are 0 to 3 to the upper layer of the PDCP layer, a count value corresponding to a 1^{st} PDCP SDU that is not delivered to the upper layer of the PDCP layer is 4, that is, the count value #a is 4. In this case, if the count value corresponding to the PDCP PDU #1 is 1, because the count value corresponding to the PDCP PDU #1 is less than the count value #a, the second PDCP entity may determine not to deliver the PDCP SDU extracted from the PDCP PDU #1 to the upper layer of the PDCP layer, and discard the PDCP PDU #1.

If the count value corresponding to the PDCP PDU #1 is larger than or equal to the count value #a, the second PDCP entity determines that the PDCP SDU extracted from the PDCP PDU #1 can be stored in the reception buffer. For example, if the second PDCP entity delivered PDCP SDUs whose corresponding count values are 0 to 3 to the upper layer of the PDCP layer, a count value corresponding to a 1^{st} PDCP SDU that is not delivered to the upper layer of the PDCP layer is 4, that is, the count value #a is 4. If the count value corresponding to the PDCP PDU #1 is 5, the second PDCP entity determines that the PDCP SDU extracted from the PDCP PDU #1 can be stored in the reception buffer.

Through the foregoing steps, the second PDCP entity may store one or more PDCP SDUs in the reception buffer.

(3) Determine, based on the count value corresponding to the PDCP PDU, whether the PDCP SDU in the reception buffer can be delivered to the upper layer of the PDCP layer:
The following uses an example in which a PDCP SDU #1 is a PDCP SDU whose corresponding count value is the smallest in the reception buffer, to describe how the second PDCP entity determines, based on the count value corresponding to the PDCP PDU, whether the PDCP SDU in the reception buffer can be delivered to the upper layer of the PDCP layer.

When the count value corresponding to the PDCP SDU #1 is equal to the count value #a, the second entity may deliver, to the upper layer of the PDCP layer, at least one PDCP SDU starting from the PDCP SDU #1 in the reception buffer, and update the count value #a to a largest count value corresponding to the at least one PDCP SDU plus 1. One or more count values corresponding to the at least one PDCP SDU are consecutive. For example, if the count value #a is 3, the reception buffer includes the PDCP SDU #1 and a PDCP SDU #2, and count values respectively corresponding to the PDCP SDU #1 and the PDCP SDU #2 are 3 and 4, the second PDCP entity may deliver the PDCP SDU #1 and the PDCP SDU #2 to the upper layer of the PDCP layer, and update the count value #a to 5. For another example, if the count value #a is 3, the reception buffer includes the PDCP SDU #1, a PDCP SDU #2, and a PDCP SDU #3, and count values corresponding to the PDCP SDU #1, the PDCP SDU #2, and the PDCP SDU #3 are 3, 4, and 6, the second PDCP entity may deliver the PDCP SDU #1 and the PDCP SDU #2 to the upper layer of the PDCP layer, and update the count value #a to 5. In this case, the PDCP SDU #3 is not delivered to the upper layer of the PDCP layer.

When the count value corresponding to the PDCP SDU #1 is larger than the count value #a, whether the second PDCP entity delivers one or more PDCP SDUs in the reception buffer to the upper layer of the PDCP layer is related to a reordering timer. For ease of understanding, the following first describes the reordering timer.

The reordering timer may be started in the following case: A count value #b is larger than the count value #a. The count value #b may be a count value of a next PDCP SDU that the second PDCP entity expects to receive. For example, the count value #b may be determined based on a largest count value corresponding to a PDCP SDU in the reception buffer of the second PDCP entity. For example (referred to as Example 1 below), the count value #b may be the largest count value corresponding to the PDCP SDU in the receiving buffer of the second PDCP entity plus 1. Optionally, the reordering timer is started only when the count value #b is larger than the count value #a and the reordering timer is not running (not running). In other words, when the count value #b is larger than the count value #a but the reordering timer is started, the reordering timer may not be restarted. For example, if the count value #a is 3, the second PDCP entity receives a PDCP SDU #2, and a count value corresponding to the PDCP SDU #2 is 4, the count value #b may be changed to 5. In this case, the count value #b is larger than the count value #a. If the reordering timer is not running in this case, the second PDCP entity may start the reordering timer.

When the reordering timer is started, the second PDCP entity may set a count value #c to a value of the count value #b, where the count value #c may indicate a count value related to a PDCP PDU that triggers the reordering timer. Usually, the count value #c may indicate a next count value of a count value corresponding to the PDCP PDU that triggers the reordering timer. For example, the count value #c may be the count value corresponding to the PDCP PDU that triggers the reordering timer plus 1. For example, in Example 1 of the previous paragraph, the count value corresponding to the PDCP PDU that triggers the reordering timer is 4, and the count value #c is 4 + 1 = 5.

The count value #b may be recorded by the second PDCP entity by using a variable RX_NEXT. An initial value of the variable RX_NEXT may be 0. The count value #c may be recorded by the second PDCP entity by using a variable RX_REORD.

When the reordering timer expires, the second PDCP entity may deliver, to the upper layer of the PDCP layer, at least one PDCP SDU starting from the PDCP SDU #1 in the reception buffer, and update the count value #a to a count value #a1, where the count value #a1 is a count value corresponding to a PDCP SDU #a1. The PDCP SDU #a1 is a PDCP SDU whose corresponding count value is the smallest in a PDCP SDU set #1, and the PDCP SDU set #1 includes all PDCP SDUs that are not uploaded to the upper layer and whose corresponding count values are larger than or equal to the count value #c.

The at least one PDCP SDU starting from the PDCP SDU #1 may include all PDCP SDUs in a PDCP SDU set #2. In other words, when the reordering timer expires, the second PDCP entity may deliver all the PDCP SDUs in the PDCP SDU set #2 to the upper layer of the PDCP layer. The PDCP SDU set #2 may include all PDCP SDUs that are in the reception buffer and whose corresponding count values are larger than and equal to the count value corresponding to the PDCP SDU #1 and less than the count value #c. For example, if the count value #a is 3, the reception buffer includes the PDCP SDU #1, the PDCP SDU #2, the PDCP SDU #3, a PDCP SDU #4, and a PDCP SDU #5, count values respectively corresponding to the PDCP SDU #1, the PDCP SDU #2, the PDCP SDU #3, the PDCP SDU #4, and the PDCP SDU #5 are 4, 5, 8, 9, and 11, and the count value #c is 8, the PDCP SDU set #2 may include the PDCP SDU #1 and the PDCP SDU #2.

Optionally, when the reordering timer expires, if a count value corresponding to a PDCP SDU #a2 in the reception buffer is equal to the count value #c, the at least one PDCP SDU starting from the PDCP SDU #1 may further include one or more PDCP SDUs starting from the PDCP SDU #a2 in the reception buffer. In other words, the second PDCP entity may deliver the one or more PDCP SDUs starting from the PDCP SDU #a2 in the reception buffer to the upper layer of the PDCP layer. Count values corresponding to the one or more PDCP SDUs are consecutive. For example, if the count value #a is 3, the reception buffer includes the PDCP SDU #1, the PDCP SDU #2, the PDCP SDU #3, the PDCP SDU #4, and the PDCP SDU #5, the count values respectively corresponding to the PDCP SDU #1, the PDCP SDU #2, the PDCP SDU #3, the PDCP SDU #4, and the PDCP SDU #5 are 4, 5, 8, 9, and 11, and the count value #c is 8, the PDCP SDU set #2 may include the PDCP SDU #1 and the PDCP SDU #2; the PDCP SDU #a2 is the PDCP SDU #3; and the one or more PDCP SDUs starting from the PDCP SDU #a2 in the reception buffer may include the PDCP SDU #3 and the PDCP SDU #4. When the reordering timer expires, the second PDCP entity may deliver the PDCP SDU #1, the PDCP SDU #2, the PDCP SDU #3, and the PDCP SDU #4 to the upper layer of the PDCP layer, and update the count value #a to 10. In addition, in this scenario, the count value #b may be 12. Therefore, the second PDCP entity may update the value of the count value #c to the value of the count value #b, and start the reordering timer.

4. In the following descriptions of this application, a number may be a count value or an SN.

As described above, the sending apparatus may discard a data unit such as a PDCP PDU or a PDCP SDU based on the discard timer. An operation of discarding a data unit may cause a gap (gap) between numbers corresponding to data units on a receiving apparatus side. For example, the numbers corresponding to the data units on the receiving apparatus side are non-consecutive, a number of a data unit received by the receiving apparatus is larger than a number of a data unit that is not received, or a number of a data unit discarded by the sending apparatus is smaller than a number of a sent or to-be-sent data unit. Consequently, the processing of received data units by the receiving apparatus is affected.

The sent data unit may be understood as data that is sent by the sending apparatus, for example, a data unit that is submitted to a lower layer and that is transmitted through an air interface or another medium.

The to-be-sent data unit may be understood as a data unit that is not sent and that is in the sending apparatus. The data unit that is not sent and that is in the sending apparatus may be understood as a data unit located at any layer or any entity in the sending apparatus. For example, the to-be-sent data unit may include data that is processed by the first PDCP entity and that is not submitted to the lower layer (for example, the first RLC entity). For another example, the to-be-sent data unit may include data that is processed by the first PDCP entity and that is submitted to the lower layer but is not sent.

For example, as shown in FIG. 2A, a sending apparatus discards PDCP SDUs corresponding to count values 0 to 6, and sequentially sends PDCP PDUs corresponding to count values 7 to 19. After the PDCP PDU corresponding to the count value 7 is received, because PDCP PDUs corresponding to the count values 0 to 6 are not received, a second PDCP entity in the receiving apparatus may start a reordering timer. During running of the reordering timer, the second PDCP entity may receive the PDCP PDUs corresponding to the count values 8 to 13, and store, in a reception buffer, PDCP SDUs in the PDCP PDUs corresponding to the count values 7 to 13 (namely, PDCP SDUs corresponding to the count values 7 to 13). During running of the reordering timer, the second PDCP entity does not deliver the PDCP SDUs corresponding to the count values 7 to 13 to an upper layer of a PDCP layer. Only when the reordering timer expires, the second PDCP entity may deliver the PDCP SDUs corresponding to the count values 7 to 13 to the upper layer of the PDCP layer. In this method, transmission delays of the PDCP SDUs corresponding to the count values 7 to 13 are increased.

In addition, durations of discard timers corresponding to different data units in the sending apparatus may be different. As a result, numbers corresponding to data units discarded by the sending apparatus may include a plurality of segments. This may further affect the processing of received data units by the receiving apparatus.

For example, as shown in FIG. 2B, the duration of discard timers set by a sending apparatus for PDCP SDUs corresponding to count values 0 to 2 and 6 to 8 is a duration #1, the duration of discard timers set by the sending apparatus for PDCP SDUs corresponding to count values 3 to 5 and 9 to 11 is a duration #2, and the duration #1 is less than the duration #2. For example, the duration #1 may be determined by using a discard timer #a, and the duration #2 may be determined by using a discard timer #b. In this case, the sending apparatus may discard the PDCP SDUs corresponding to the count values 0 to 2 and 6 to 8, and sequentially send PDCP PDUs corresponding to the count values 3 to 5 and 9 to 11. After the PDCP PDU corresponding to the count value 3 is received, because PDCP PDUs corresponding to the count values 0 to 2 are not received, a second PDCP entity in the receiving apparatus may start a reordering timer. During running of the reordering timer, the second PDCP entity may receive the PDCP PDUs corresponding to the count values 4 and 5 and 9 to 11, and store, in a reception buffer, PDCP SDUs in the PDCP PDUs corresponding to the count values 3 to 5 and 9 to 11 (namely, the PDCP SDUs corresponding to the count values 3 to 5 and 9 to 11). During running of the reordering timer, the second PDCP entity does not deliver the PDCP SDUs corresponding to the count values 3 to 5 and 9 to 11 to an upper layer of a PDCP layer. Only when the reordering timer expires, the second PDCP entity may deliver the PDCP SDUs corresponding to the count values 3 to 5 to the upper layer of the PDCP layer, and update a count value #a to 6.

Because PDCP PDUs corresponding to the count values 6 to 8 are not received, the second PDCP entity in the receiving apparatus may restart the reordering timer. During running of the reordering timer, the second PDCP entity does not deliver the PDCP SDUs corresponding to the count values 9 to 11 to the upper layer of the PDCP layer. Only when the reordering timer expires, the second PDCP entity may deliver the PDCP SDUs corresponding to the count values 9 to 11 to the upper layer of the PDCP layer, and update the count value #a to 12.

In this method, transmission delays of the PDCP SDUs corresponding to the count values 9 to 11 are further increased.

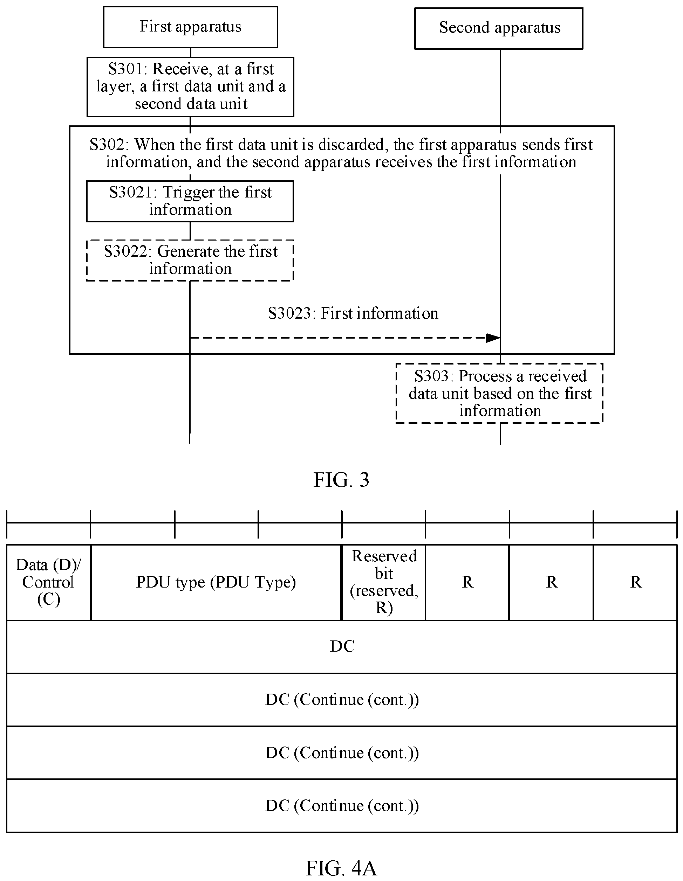

An embodiment of this application provides a communication method. FIG. 3 is a schematic flowchart corresponding to a communication method according to this application. In FIG. 3, the method is illustrated by using an example in which a first apparatus and a second apparatus are used as execution bodies of interaction illustration. However, the execution bodies of the interaction illustration are not limited in this application. For example, the first apparatus may be a terminal (for example, UE), may be a module used in the terminal, for example, a chip, a chip system, or a processor, or may be a logical node, a logical module, or software that can implement all or part of functions of the terminal. The second apparatus may be an access network device (for example, a RAN), may be a module used in the access network device, for example, a chip, a chip system, or a processor, or may be a logical node, a logical module, or software that can implement all or part of functions of the access network device.

As shown in FIG. 3, the method includes the following steps.

**S301:** The first apparatus may receive, at a first layer, a first data unit and a second data unit.

The first data unit may correspond to a first number. Optionally, the first number may be allocated by the first apparatus to the first data unit. For example, the first number may be allocated to the first data unit by an entity corresponding to the first layer (which may be referred to as a first entity below) in the first apparatus. In this application, the first number may be a count value or an SN. Therefore, for specific content of allocating the first number to the first data unit by the first entity, refer to the descriptions of "allocating the count value and the SN to the PDCP SDU" in the foregoing descriptions of the terms. The only difference is that the first PDCP entity is replaced with the first entity, and the PDCP SDU is replaced with the first data unit. Details are not described herein again.

The second data unit may correspond to a second number. Optionally, the second number may be allocated by the first apparatus to the second data unit. For example, the second number may be allocated by the first entity to the second data unit. In this application, the second number may be a count value or a sequence number. Therefore, for specific content of allocating the second number to the second data unit by the first entity, refer to the descriptions of "allocating the count value and the SN to the PDCP SDU" in the foregoing descriptions of the terms. The only difference is that the first PDCP entity is replaced with the first entity, and the PDCP SDU is replaced with the second data unit. Details are not described herein again.

In some implementations, the second number may be larger than the first number. Optionally, in this implementation, the first number and the second number each may be one or more digits. For example, if the first number is 2 and the second number is 3, the second number is larger than the first number.

In some other implementations, the second number may be after the first number. Optionally, in this implementation, the first number and the second number may belong to a sequence having a sequence relationship. For example, the first number and the second number may belong to a sequence including English letters. If the first number is A and the second number is B, the second number is after the first number.

It should be understood that the first number and the second number may be consecutive or non-consecutive. In addition, when the first number is a count value, the second number may be a count value; or when the first number is an SN, the second number may be an SN.

Optionally, in S301, the first apparatus may receive, at the first layer, the first data unit and the second data unit that are from an upper layer of the first layer. For example, the first layer may be a PDCP layer, and the first apparatus may receive, at the PDCP layer, the first data unit and the second data unit that are from the upper layer (for example, an SDAP layer) of the PDCP layer. In other words, a first PDCP entity in the first apparatus may receive the first data unit and the second data unit that are from the upper layer (for example, the SDAP layer) of the PDCP layer.

**S302:** When the first data unit is discarded, the first apparatus may send first information. In other words, when a first condition is met, the first apparatus may send the first information, where the first condition may include a condition #1: The first data unit is discarded. Correspondingly, the second apparatus receives the first information. The first information may indicate that a data unit is discarded.

For example, the first apparatus receives, at the first layer, the first data unit and the second data unit. The first number corresponding to the first data unit is 2, and the second number corresponding to the second data unit is 3. When the first data unit is discarded, the first apparatus may send the first information; and correspondingly, the second apparatus may receive the first information.

In S302, the first apparatus may determine that the first data unit is discarded, that is, determine that the condition #1 is met. There may be a plurality of determining manners, for example, Manner a1 and/or Manner a2.

**Manner a1:** The first apparatus may determine, based on a discard timer corresponding to the first data unit, that the first data unit is discarded.

In some examples, if the first data unit is still in a buffer of the first apparatus when the discard timer corresponding to the first data unit expires, the first apparatus may determine that the first data unit is to be discarded, and discard the first data unit.

In some other examples, if the first data unit is not transmitted by a lower layer of the first layer when the discard timer corresponding to the first data unit expires, the first apparatus may determine that the first data unit is to be discarded, and discard the first data unit. For example, the first layer is a PDCP layer. When the discard timer corresponding to the first data unit expires, if an RLC layer of the first apparatus does not submit the first data unit to a lower layer of the RLC layer, or the lower layer of the first layer does not send the first data unit through a radio unit, the first apparatus may determine that the first data unit is to be discarded, and discard the first data unit.

Optionally, Manner a1 is applicable to an RLC unacknowledged mode (unacknowledged mode, UM). In the UM, a second RLC entity may not send, to a first RLC entity, information indicating whether a data unit is successfully received.

In Manner a1, the first apparatus can accurately determine, in time based on the discard timer, that the first data unit is discarded.

**Manner a2:** The first apparatus may determine, based on feedback information for the first data unit, that the first data unit is discarded. For example, if the first apparatus does not receive feedback information indicating that the first data unit is successfully received, the first apparatus may determine that the first data unit is discarded. That the first apparatus does not receive the feedback information indicating that the first data unit is successfully received may be understood as that the feedback information may indicate that the first data unit is not successfully received, may be understood as that the first apparatus does not receive the feedback information for the first data unit, or may be understood as that the first data unit is not acknowledged by the feedback information.

For example, a first RLC entity in the first apparatus and a second RLC entity in the second apparatus may use an acknowledged mode (acknowledged mode, AM). In the AM, the second RLC entity may determine, based on numbers of received data units, numbers corresponding to data units that are not received, so as to send feedback information to the first RLC entity. After receiving the feedback information, the first RLC entity may send the feedback information to the first PDCP entity that is in the first apparatus. The first PDCP entity may determine, based on the feedback information, that the first data unit is discarded. For example, the first number corresponding to the first data unit is 1. If the numbers of the data units received by the second RLC entity include 0 and 2, the second RLC entity may send feedback information to the first RLC entity, where the feedback information indicates that the first data unit corresponding to the number 1 is not successfully received. The first RLC entity indicates, to the first PDCP entity, a data receiving status based on the feedback information, and the first PDCP entity may determine, based on the feedback information, that the first data unit corresponding to the number 1 is discarded.

In Manner a2, the first apparatus can quickly and accurately determine, based on the feedback information, that the first data unit is discarded.

Optionally, the first apparatus may further determine, in Manner a1 and Manner a2, that the first data unit is discarded. In other words, Manner a1 and Manner a2 may alternatively be used together to determine that the condition #1 is met. For example, the first apparatus may determine, based on the discard timer corresponding to the first data unit and the feedback information of the first data unit, that the first data unit is discarded. For example, when the discard timer corresponding to the first data unit expires, and the first apparatus does not receive the feedback information indicating that the first data unit is successfully received, the first apparatus may determine that the first data unit is discarded.

Optionally, S302 may be implemented in a plurality of manners, for example, at least one of Manner b1 to Manner b5.

### Manner b1:

S302 may include step B1 and step B2.

**Step B1:** When the first data unit is discarded, the first apparatus may start or restart a first timer. In other words, the first timer may be started or restarted when the first data unit is discarded; or when the condition #1 is met, the first apparatus may start or restart the first timer, where the condition #1 may include: The first data unit is discarded.

For example, the first apparatus receives, at the first layer, the first data unit and the second data unit. The first number corresponding to the first data unit is 2, and the second number corresponding to the second data unit is 3. When the first data unit is discarded, the first apparatus may start or restart the first timer.

A duration of the first timer may be preset, for example, specified in a protocol, or stored in factory settings or a subscriber identity module (subscriber identity module, SIM) card of the first apparatus, may be determined by the first apparatus, or may be notified to the first apparatus after being determined by another apparatus (for example, the second apparatus or a core network device). This is not limited in this application. For example, the duration of the first timer is obtained by the first apparatus via a radio resource control (radio resource control, RRC) message. In addition, the first timer may be a conventional timer, or may be a newly added timer. This is not limited in this application.

Optionally, step B1 may be performed by the first entity (for example, the first PDCP entity) that is in the first apparatus. Specifically, when the first data unit is discarded, the first entity may start or restart the first timer.

In some possible manners, step B1 may be replaced with step B1': The first apparatus may start or restart the first timer after the first data unit is discarded. For example, the first apparatus starts or restarts the first timer after a first duration following the discarding of the first data unit. The first duration may be preset, for example, specified in a protocol, or stored in factory settings or a SIM card of the first apparatus, may be determined by the first apparatus, or may be notified to the first apparatus after being determined by another apparatus (for example, the second apparatus or a core network device). This is not limited in this application. When the first duration is notified by the another apparatus to the first apparatus, the first duration may be semi-statically configured (for example, carried in an RRC message), or may be dynamically indicated.

**Step B2:** When the first timer expires, the first apparatus may send the first information.

In Manner b1, when the first data unit is discarded, the first apparatus may temporarily withhold sending of the first information. The first apparatus sends the first information only when the first timer expires. In this way, if a new data unit is discarded during running of the first timer, the first apparatus does not need to send one piece of first information for each discarded data unit, thereby reducing signaling overhead and saving transmission resources.

Optionally, in Manner b1, S302 may be replaced with the following: When the first condition is met, the first apparatus may send the first information, where the first condition may include a condition #1 and a condition #2. The condition #1 may include: The first data unit is discarded. The condition #2 may include: A first timer expires, where the first timer is started or restarted when the first data unit is discarded. For specific content of the condition #1, refer to the descriptions of "the first data unit is discarded" in S302. For specific content of the condition #2, refer to the descriptions of expiration of the first timer in Manner b1.

### Manner b2:

S302 may include step C1 and step C2.

**Step C1:** When the first data unit is discarded, the first apparatus may start or restart a first timer.

For specific content of step C1, refer to step B1. Details are not described herein again.

**Step C2:** When the first timer expires, and there is no data unit corresponding to the first number within an entire duration of the first timer (or during running of the first timer), the first apparatus may send the first information. In other words, if there is no data unit corresponding to the first number within the entire duration of the first timer, the first apparatus may send the first information when the first timer expires.

The following describes a case where there is no data unit corresponding to the first number within the entire duration of the first timer.

Optionally, if the first apparatus does not allocate the first number to a subsequent data unit within the entire duration of the first timer, there is no data unit corresponding to the first number within the entire duration of the first timer.

In some examples, if a quantity of data units received by the first apparatus at the first layer is less than a quantity of discarded data units within the entire duration of the first timer, the first apparatus may not allocate the first number to a subsequent data unit within the entire duration of the first timer. In this case, there is no data unit corresponding to the first number within the entire duration of the first timer. For example, within the entire duration of the first timer, the first apparatus receives four data units at the first layer. The first apparatus discards five data units, and numbers corresponding to the five data units are respectively 0 to 4. The first apparatus may respectively allocate numbers 0 to 3 to the four received data units. There is no data unit corresponding to the number 4 within the entire duration of the first timer.

In some other examples, if a quantity of data units in the first apparatus whose numbers can be set or modified is less than a quantity of discarded data units within the entire duration of the first timer, the first apparatus may not allocate the first number to a subsequent data unit within the entire duration of the first timer. The data unit whose number can be modified may be a data unit to which a number is allocated and on which ciphering and integrity protection are completed. In this case, there is no data unit corresponding to the first number within the entire duration of the first timer. For example, within the entire duration of the first timer, the quantity of data units in the first apparatus whose numbers can be modified is 4. The first apparatus discards five data units, and numbers corresponding to the five data units are respectively 0 to 4. The first apparatus may modify, to 0 to 3 respectively, the numbers of the data units whose numbers can be modified. There is no data unit corresponding to the number 4 within the entire duration of the first timer.

In some examples, if a first quantity sum is less than a quantity of discarded data units within the entire duration of the first timer, and the first quantity sum is a sum of the quantity of data units in the first apparatus whose numbers can be set or modified and a quantity of data units received by the first apparatus at the first layer, the first apparatus may not allocate the first number to a subsequent data unit within the entire duration of the first timer. In this case, there is no data unit corresponding to the first number within the entire duration of the first timer. For example, within the entire duration of the first timer, the quantity of data units in the first apparatus whose numbers can be modified is 2, and the first apparatus receives two data units at the first layer. The first apparatus discards five data units, and numbers corresponding to the five data units are respectively 0 to 4. The first apparatus may modify, to 0 and 1 respectively, the numbers of the two data units whose numbers can be modified, and allocate numbers 2 and 3 to the two received data units respectively. There is no data unit corresponding to the number 4 within the entire duration of the first timer.

Optionally, if there is a data unit corresponding to the first number within the entire duration of the first timer (for example, when the first timer is running), and the first apparatus allocates the first number to a data unit that subsequently arrives at the first layer, the first apparatus may stop (or stop and reset) the first timer.

There may be multiple occasions for the first apparatus to determine that there is no data unit corresponding to the first number within the entire duration of the first timer.

In some implementations, the first apparatus may determine, when the first timer expires, whether there is no data unit corresponding to the first number within the entire duration of the first timer. For example, when the first timer expires, if there is no sent or to-be-sent data unit corresponding to the first number, the first apparatus may determine whether there is no data unit corresponding to the first number within the entire duration of the first timer.

In some other implementations, the first apparatus may periodically or aperiodically determine, during running of the first timer, whether there is no data unit corresponding to the first number within the entire duration of the first timer. For example, during running of the first timer, the first apparatus may periodically or aperiodically determine whether there is a sent or to-be-sent data unit corresponding to the first number. If the first apparatus determines, during running of the first timer, that there is no sent or to-be-sent data unit corresponding to the first number, the first apparatus may determine whether there is no data unit corresponding to the first number within the entire duration of the first timer.

The following describes steps C1 and C2 by using examples.

For example, the first apparatus receives, at the first layer, the first data unit and the second data unit. The first number corresponding to the first data unit is 2, and the second number corresponding to the second data unit is 3. When the first data unit is discarded, the first apparatus may start the first timer. If there is no data unit corresponding to the first number within the entire duration of the first timer, the first apparatus may send the first information when the first timer expires. In this case, the first information may be determined based on the first number. Specific content of the first information is described in the following Manner c1 to Manner c3, and details are not described herein.

In Manner b2, when the first data unit is discarded, the first apparatus may temporarily withhold sending of the first information. If there is a data unit, corresponding to the first number, in the first apparatus within the entire duration of the first timer, the first apparatus may withhold sending of the first information. If there is no data unit, corresponding to the first number, in the first apparatus within the entire duration of the first timer, the first apparatus may send the first information when the first timer expires. In this way, the first apparatus may send the first information as required, thereby reducing signaling overhead and saving transmission resources.

Optionally, in Manner b2, S302 may be replaced with the following: When the first condition is met, the first apparatus may send the first information, where the first condition may include a condition #1, a condition #2, and a condition #3. The condition #1 may include: The first data unit is discarded. The condition #2 may include: A first timer expires, where the first timer is started or restarted when the first data unit is discarded. The condition #3 may include: There is no data unit corresponding to the first number within the entire duration of the first timer. For specific content of the condition #1, refer to the descriptions of "the first data unit is discarded" in S302. For specific content of the condition #2, refer to the descriptions of expiration of the first timer in Manner b1. For specific content of the condition #3, refer to the descriptions of "there is no data unit corresponding to the first number within the entire duration of the first timer" in Manner b2. Optionally, the condition #3 may alternatively be replaced with the following: When the first timer expires, there is no data unit corresponding to the first number.

In some possible manners, step C1 in Manner b2 may be replaced with step C1': When a fifth data unit is discarded, the first apparatus may start or restart a first timer. In other words, the first timer may be started or restarted when the fifth data unit is discarded. The fifth data unit may correspond to a fifth number. The fifth number and the first number may be different. For example, the fifth number may be larger than the first number, or may be less than the first number. The following describes Manner b2 after the replacement by using examples. For example, the first apparatus receives, at the first layer, the fifth data unit, the first data unit, and the second data unit. The fifth number corresponding to the fifth data unit is 1, the first number corresponding to the first data unit is 2, and the second number corresponding to the second data unit is 3. When the fifth data unit is discarded, the first apparatus may start the first timer. During running of the first timer, the first data unit is discarded. If the first apparatus receives only one data unit within the entire duration of the first timer, the first apparatus may allocate the fifth number 1 to the received data unit, but there is no data unit corresponding to the first number 2 within the entire duration of the first timer. Therefore, when the first timer expires, the first apparatus may send the first information.

In this case, the condition #2 may be replaced with a condition #2': A first timer expires, where the first timer is started or restarted when a fifth data unit is discarded, and the fifth data unit may correspond to a fifth number. The fifth number and the first number may be different.

Optionally, in this manner, the first apparatus may determine, in the following manner, whether there is no data unit corresponding to the first number within the entire duration of the first timer.

After the first timer is started, the first apparatus may record the fifth number and a sixth number. The sixth number may be a largest number (or a next number of the largest number, for example, a count value #b), corresponding to all data units at the first layer, when the first timer is started, or may be a largest number (or a next number of the largest number) corresponding to discarded data units in all the data units at the first layer. If there is a number gap (for example, a number corresponding to a discarded data unit) between the fifth number and the sixth number within the entire duration of the first timer (or before the first timer expires), the first apparatus may determine that there is no data unit corresponding to the first number within the entire duration of the first timer.

For example, the first apparatus receives, at the first layer, the fifth data unit, the first data unit, and the second data unit. The fifth number corresponding to the fifth data unit is 1, the first number corresponding to the first data unit is 2, and the second number corresponding to the second data unit is 3. When the fifth data unit is discarded, the first apparatus may start the first timer, and record the fifth number and the sixth number. If the sixth number is the largest number corresponding to all the data units at the first layer, the sixth data unit may be the second number 3. If the sixth number is the largest number corresponding to all the data units at the first layer plus 1, the sixth data unit may be 3 + 1 = 4. During running of the first timer, the first data unit is discarded. If the first apparatus receives only one data unit within the entire duration of the first timer, the first apparatus may allocate the fifth number 1 to the received data unit. When the first timer expires, there is still a number, for example, 2, that corresponds to no data unit and that is between the fifth number 1 and the sixth number 3 (or 4). Therefore, the first apparatus may determine that there is no data unit corresponding to the first number within the entire duration of the first timer.

### Manner b3:

S302 may include: When the first data unit is discarded, and a quantity of discarded data units is larger than or equal to (or larger than) a first threshold, the first apparatus may send the first information. In other words, when the first condition is met, the first apparatus may send the first information, where the first condition may include the condition #1 and a condition #4. The condition #1 may include: The first data unit is discarded. The condition #4 may include: The quantity of discarded data units is larger than or equal to (or larger than) the first threshold.

For example, the first apparatus receives six data units at the first layer, and numbers corresponding to the six data units are respectively 0 to 5. The six data units include the first data unit, and the first number corresponding to the first data unit is 0. The first threshold is 3. After discarding the first data unit, the first apparatus may temporarily withhold sending of the first information. If the first apparatus continues to discard the data units corresponding to the numbers 1 and 2 to cause the quantity of discarded data units to be equal to the first threshold, the first apparatus may send the first information.

Optionally, the first apparatus may include a first counter, and the first counter may be configured to record the quantity of discarded data units. For example, an initial value of the first counter is 0. Each time a data unit is discarded, a value of the first counter may be incremented by one. When the value of the first counter is larger than or equal to the first threshold, the first apparatus may determine that the quantity of discarded data units is larger than or equal to the first threshold, and send the first information. Optionally, when the value of the first counter is larger than or equal to the first threshold, the first apparatus may reset the first counter to the initial value.

The first threshold may be preset, for example, specified in a protocol, or stored in factory settings or a SIM card of the first apparatus, may be determined by the first apparatus, or may be notified to the first apparatus after being determined by another apparatus (for example, the second apparatus or a core network device). This is not limited in this application. If the first threshold is notified by the another apparatus to the first apparatus, the first threshold may be carried in a semi-static message, for example, an RRC message. In other words, the first threshold may be semi-statically configured. Alternatively, the first threshold may be carried in a dynamic message, for example, downlink control information (downlink control information, DCI) or a MAC CE. In other words, the first threshold may be dynamically indicated.

In Manner b3, when the first data unit is discarded, the first apparatus may temporarily withhold sending of the first information. The first apparatus sends the first information only when the quantity of discarded data units is larger than or equal to the first threshold. Therefore, a case in which one piece of first information is sent each time a data unit is discarded can be avoided, thereby reducing signaling overhead and saving transmission resources.

### Manner b4:

S302 may include: When the first data unit is discarded, and the first data unit belongs to a first data unit set, for example, a first PDU set, the first apparatus may send the first information. In other words, when the first condition is met, the first apparatus may send the first information, where the first condition may include the condition #1 and a condition #5. The condition #1 may include: The first data unit is discarded. The condition #5 may include: The first data unit belongs to the first data unit set.

For example, if the first data unit set includes data units corresponding to numbers 0 to 6, and the first number corresponding to the first data unit is 0, when the first data unit is discarded, the first apparatus may send the first information.

Optionally, when the first data unit is discarded, and the first data unit belongs to the first data unit set, the first apparatus may send one single piece of first information for the first data unit set. In other words, the first apparatus does not send two or more pieces of first information for the first data unit set. In other words, in addition to the condition #1 and the condition #5, the first condition may further include a condition #6. The condition #6 includes: The first data unit set does not trigger the first information. In other words, any data unit in the first data unit set does not trigger the first information; or the first apparatus does not trigger or send the first information based on any data unit in the first data unit set.

In some examples, when the first data unit is discarded, and the first data unit belongs to the first PDU set, the first apparatus may send one piece of first information for the first PDU set. For example, if the first PDU set includes data units corresponding to numbers 0 to 6, and the first number corresponding to the first data unit is 0, when the first data unit is discarded, the first apparatus may determine to discard all the data units in the first PDU set, and send one piece of first information. Optionally, the first data unit may be a 1^{st} data unit that is discarded. For example, the first data unit may be a data unit that is in the data units included in the first PDU set and whose corresponding discard timer expires earliest; or the first data unit may be a 1^{st} data unit that arrives at the first PDCP entity and that is in the first PDU set.

In some other examples, when the first data unit is discarded, and the first data unit belongs to the first data unit set, if one or more data units in the first data unit set are discarded, and the first data unit is a last data unit in the first data unit set, the first apparatus may send the first information. In this case, the first data unit may be a data unit whose corresponding discard timer expires the latest in all data units in the first data unit set, or may be a last data unit that arrives at the first layer of the first apparatus in all the data units in the first data unit set.

For example, the first data unit set includes data units corresponding to numbers 0 to 6. When the data units corresponding to the numbers 0 to 5 are discarded, the first apparatus may temporarily withhold sending of the first information. When the data unit corresponding to the number 6 is discarded, the first apparatus may send one piece of first information. When the data unit corresponding to the number 6 is a data unit whose corresponding discard timer expires the latest in the data units corresponding to the numbers 0 to 6, the first apparatus may send one piece of first information; or when the data unit corresponding to the number 6 is discarded, and the data unit corresponding to the number 6 is a last data unit that arrives at the first layer of the first apparatus in the data units corresponding to the numbers 0 to 6, the first apparatus may send one piece of first information.

In this manner, the first apparatus may send one piece of first information for the first data unit set. In this way, the first apparatus does not need to send one piece of first information for each discarded data unit in the first data unit set, thereby reducing signaling overhead and saving transmission resources. In this scenario, it may be understood that the first information is triggered by using a data unit set as a granularity.

Optionally, if packet discard at a granularity of a data unit set, for example, a PDU set, is configured for the first apparatus, when the first data unit is discarded and the first data unit belongs to the first PDU set, the first apparatus may send one piece of first information for the first PDU set.

### Manner b5:

S302 may include: When the first data unit is discarded, and the second data unit is sent or to be sent, the first apparatus may send the first information. In other words, when the first data unit is discarded and the second data unit is not discarded, the first apparatus may send the first information; when there is a gap between numbers of data units transmitted between the first apparatus and the second apparatus, the first apparatus may send the first information; or when a first condition is met, the first apparatus may send the first information, where the first condition may include the condition #1 and a condition #7. The condition #1 may include: The first data unit is discarded. The condition #7 may include: The second data unit is sent or to be sent.

For example, the first apparatus receives, at the first layer, the first data unit and the second data unit. The first number corresponding to the first data unit is 2, and the second number corresponding to the second data unit is 3. When the first data unit is discarded, and the second data unit is sent or to be sent, the first apparatus may send the first information.

Optionally, the second data unit is ciphered and/or integrity protected. In this way, the first apparatus cannot eliminate the gap between the numbers of the data units by modifying the number of the second data unit.

In Manner b5, the first apparatus sends the first information only when the first data unit is discarded and the second data unit is sent or to be sent, that is, when there is a gap between numbers of data units because the first data unit is discarded. It should be understood that, if all data units of the first apparatus are discarded, even if the first apparatus sends the first information, the second apparatus cannot process the received data unit based on the first information, and transmission resources are unnecessarily occupied. In Manner b5, a waste of resources can be avoided.

It should be understood that, when there is no contradiction, at least two of Manner b1 to Manner b5 may be combined. For example, Manner b5 may be combined with one or more of Manner b1 to Manner b4. In this case, based on one or more of Manner b1 to Manner b4, the first condition may further include the condition #7.

In some examples, Manner b1 and Manner b5 are combined. The first condition may include the condition #1, the condition #2, and the condition #7. For example, when the first data unit is discarded, and the second data unit is sent or to be sent, the first apparatus may start or restart the first timer. For example, the first apparatus receives, at the first layer, the first data unit and the second data unit. The first number corresponding to the first data unit is 2, and the second number corresponding to the second data unit is 3. When the first data unit is discarded, because there is still the second data unit to be sent, and the number of the second data unit is larger than that of the first data unit, the first apparatus may start or restart the first timer. If there is no data unit corresponding to the first number within the entire duration of the first timer (or during running of the first timer), and the second data unit is sent or to be sent, when the first timer expires, the first apparatus may send the first information.

In some other examples, Manner b3 and Manner b5 are combined. The first condition may include the condition #1, the condition #4, and the condition #7. For example, when the first data unit is discarded, the second data unit is sent or to be sent, and the quantity of discarded data units is larger than or equal to (or larger than) the first threshold, the first apparatus may send the first information.

Optionally, in S302, the first apparatus may further periodically determine whether to send the first information. In this case, the foregoing first condition may further include a condition #8. The condition #8 may include: A current time is a time determined based on a sending periodicity. The sending periodicity may be preset, for example, specified in a protocol, or stored in factory settings or a SIM card of the first apparatus, may be determined by the first apparatus, or may be notified to the first apparatus after being determined by another apparatus (for example, the second apparatus or a core network device). This is not limited in this application. Optionally, when the sending periodicity is notified by the another apparatus to the first apparatus, the sending periodicity may be indicated by configuration information. In this way, after receiving the configuration information, the first apparatus may send the first information to the second apparatus based on the sending periodicity indicated by the configuration information. For example, if the sending periodicity indicated by the configuration information is 100 time units, for example, millisecond (ms), in S302, a time at which the first apparatus sends the first information may belong to a time set: 0 ms, 100 ms, 200 ms, and (200+n*100) ms, where n is a positive integer.

In some examples, the first condition may include the condition #1 and the condition #8. A time #1 is any time determined based on the sending periodicity. If the first data unit is discarded at the time #1, the first apparatus may send the first information. In other words, if no data unit is discarded at the time #1, the first apparatus may withhold sending of the first information. For example, the first apparatus determines, based on the sending periodicity, that the time set includes 0 ms, 100 ms, 200 ms, and (200+n*100) ms, where n is a positive integer. At each time in the time set, the first apparatus may determine whether the first data unit is discarded. If the first data unit is discarded, the first apparatus may send the first information. For example, if the first data unit is not discarded at 0 ms, the first apparatus may withhold sending of the first information. If the first data unit is discarded between 0 ms and 100 ms, or at 100 ms, the first apparatus may send the first information at 100 ms.

In some other examples, the first condition may include the condition #1, the condition #8, and the condition #7. A time #1 is any time determined based on the sending periodicity. At the time #1, if the first data unit is discarded, the second data unit is sent or to be sent, and the second number corresponding to the second data unit is larger than the first number corresponding to the first data unit, the first apparatus may send the first information. For example, the first apparatus determines, based on the sending periodicity, that the time set includes 0 ms, 100 ms, 200 ms, and (200+n*100) ms, where n is a positive integer. At each time in the time set, the first apparatus may determine whether the first data unit is discarded, whether the second data unit is sent or to be sent, and whether the second number corresponding to the second data unit is larger than the first number corresponding to the first data unit. If the first data unit is discarded, the second data unit is sent or to be sent, and the second number corresponding to the second data unit is larger than the first number corresponding to the first data unit, the first apparatus may send the first information. For example, the first number corresponding to the first data unit is 2, and the second number corresponding to the second data unit is 3. If the first data unit is not discarded at 0 ms, the first apparatus may withhold sending of the first information. If the first data unit is discarded between 0 ms and 100 ms, or at 100 ms, and the second data unit is sent or to be sent at 100 ms, the first apparatus may send the first information at 100 ms.

In some possible manners, S302 in which the first apparatus sends the first information may include S3021 to S3023. In other words, that the first apparatus sends the first information may be replaced with S3021 to S3023. S3022 and S3023 may be optional steps. If S302 includes S3021, but does not include S3022 and S3023, sending in S302 may be replaced with triggering. For example, step S302 may be understood as follows: When the first condition is met, the first apparatus may trigger the first information.

S3021: The first apparatus triggers (trigger) the first information.

Optionally, the first entity (for example, the first PDCP entity) in the first apparatus may trigger the first information.

S3022: The first apparatus generates the first information.

A specific process in which the first apparatus generates the first information is not limited in this application.

S3023: The first apparatus sends the first information; and correspondingly, the second apparatus receives the first information.

Optionally, the first apparatus may perform S3021 to S3023 at different times. For example, S3022 may be performed after S3021, and S3023 may be performed after S3022.

As described above, the first information may indicate that a data unit is discarded, and there may be a plurality of indication manners, for example, at least one of Manner c1 to Manner c3.

**Manner c1:** The first information may indicate that the first data unit is discarded.

Optionally, the first information may indicate that M data units are discarded, the M data units may include the first data unit, and M may be a positive integer.

In some implementations, the M data units may be one data unit that triggers the first information. For example, in S302, if the first apparatus can send the first information when the first data unit is discarded, the M data units may be the first data unit.

In some other implementations, the M data units may include at least one of the following: all data units discarded at the first layer when the first information is triggered (or generated, constructed, or sent); or the M data units may include a data unit, in all the data units discarded at the first layer when the first information is triggered (or generated, constructed, or sent), whose corresponding number is not used, for example, is not allocated or set to a subsequent data unit.

In some examples, if an implementation of S302 is Manner b1, the M data units may include the first data unit and all data units discarded during running of the first timer. For example, when the first data unit is discarded, the first apparatus may start or restart the first timer. If a fourth data unit is discarded during running of the first timer, the M data units may include the first data unit and the fourth data unit.

In some examples, if an implementation of S302 is Manner b2, the M data units may include all data units corresponding to numbers in a first number group. The first number group may include the first number corresponding to the first data unit. A data unit corresponding to any number in the first number group is discarded, and there is no data unit corresponding to any number within the entire duration of the first timer. For example, the first apparatus receives, at the first layer, the first data unit, a fourth data unit, and the second data unit. The first number corresponding to the first data unit is 2, a fourth number corresponding to the fourth data unit is 3, and the second number corresponding to the second data unit is 4. When the first data unit is discarded, the first apparatus may start or restart the first timer. If the fourth data unit is discarded during running of the first timer, and the first apparatus allocates the fourth number 3 to a subsequent data unit, the M data units may include the first data unit.

In some examples, if an implementation of S302 is Manner b4, the M data units may include all discarded data units in the first data unit set. For example, packet discard at a granularity of a PDU set is configured for the first apparatus. If the first PDU set includes data units corresponding to numbers 0 to 6, when any data unit in the first PDU set is discarded, the first apparatus may determine to discard all data units in the first PDU set, and the M data units may include the data units corresponding to the numbers 0 to 6. For another example, if the first PDU set includes data units corresponding to numbers 0 to 6, and the data units corresponding to the numbers 0, 2, and 4 are discarded, the M data units may include the data units corresponding to the numbers 0, 2, and 4.

Optionally, if the first information indicates M numbers, and the M numbers are numbers corresponding to the M data units, the first information may indicate that the M data units are discarded. The first information may indicate the M numbers in a plurality of manners, for example, at least one of Manner d1 to Manner d8.

**Manner d1:** The first information includes the M numbers.

For example, the first information may be shown in FIG. 4A. The first number corresponding to the first data unit may be indicated by a discard count (discard COUNT, DC) in FIG. 4A. For example, a length of the DC may be 32 bits. In this scenario, the first information includes M=1 number.

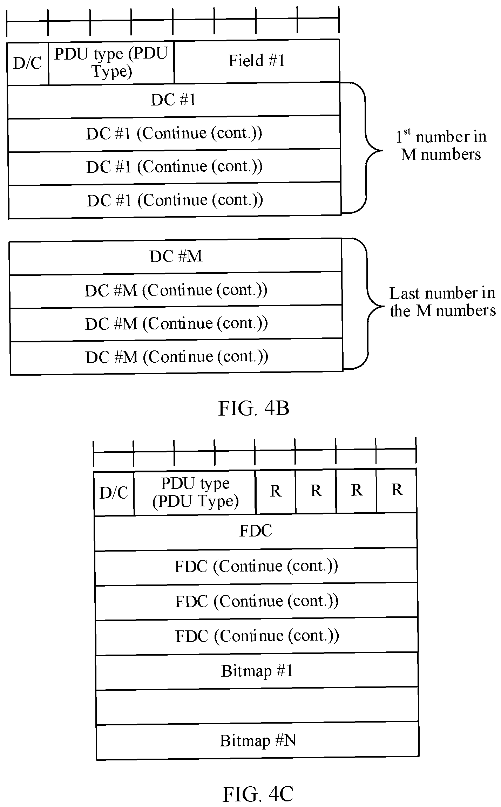

For another example, the first information may be shown in FIG. 4B. The M numbers may be respectively indicated by a DC #1 to a DC #M in FIG. 4B. For example, a length of each of the DC #1 to the DC #M may be 32 bits. M may be an integer larger than or equal to 2. Optionally, in the first information, the M numbers may be sorted in ascending order or descending order of the M numbers. For example, if the M numbers are 2, 5, and 7, and the M numbers are sorted in ascending order of the M numbers, the first information may include the DC #1 to a DC #3, where a number indicated by the DC #1 is 2, a number indicated by the DC #2 is 5, and a number indicated by the DC #3 is 7.

Optionally, in Manner d1, the first information may further indicate M. In other words, the first information may further indicate a quantity of discarded data units, or the first information may further indicate a quantity of numbers corresponding to the discarded data units. For example, as shown in FIG. 4B, the first information may include a field #1, and a value of the field #1 may indicate M. For example, the value of the field #1 is M or M-1.

A value range of the field #1 may be related to a bit width x occupied by the field, where x may be in a unit of bits. For example, if the value of the field #1 is [0, 2^{x} - 1], M may be 2^{x} or 2^{x} + 1 at most. For example, when the field #1 includes four bits, the field #1 may indicate, at most, that 16 or 17 data units are discarded. The field #1 may be named in a plurality of manners, for example, a quantity of discard counts. This is not limited in this application.

Optionally, when M is larger than or equal to 2, the first information may indicate M. In other words, when M is equal to 1, the first information may not indicate M.

In Manner d1, the first information can accurately indicate the M numbers corresponding to the M discarded data units.

**Manner d2:** The first information may indicate a 1^{st} number in the M numbers and a first bitmap. A bit in the first bitmap may correspond a number, and may be used to determine whether the number corresponding to the bit belongs to the M numbers. For example, the first information may include the 1^{st} number in the M numbers and the first bitmap; or the first information may include information that has a correspondence with the 1^{st} number in the M numbers and the first bitmap.

In some implementations, a 1^{st} bit in the first bitmap may correspond to the 1^{st} number in the M numbers, and last M-1 numbers in the M numbers may be determined based on bits whose values are a first value in the first bitmap (for example, 1 or 0). Optionally, when a value of a bit in the first bitmap is the first value, it indicates that a data unit corresponding to the bit is discarded; and/or when a value of a bit in the first bitmap is a second value (for example, 0 or 1), it indicates that a data unit corresponding to the bit is not discarded (for example, is sent or to be sent). The first value and the second value are different.

Optionally, bits in the first bitmap may correspond, in ascending order of numbers, to the 1^{st} number in the M numbers and one or more subsequent numbers. For example, in the first information, the 1^{st} number in the M numbers is 2, and the first bitmap is 1000101. The 1^{st} bit in the first bitmap corresponds to the number 2, and the subsequent six bits in the first bitmap respectively correspond to numbers 3 to 8. If the first value is 1, the M numbers may include 2, 6, and 8.

In some other implementations, the 1^{st} bit in the first bitmap corresponds to a next neighboring number of the 1^{st} number in the M numbers, and last M-1 numbers in the M numbers may be determined based on bits whose values are a first value in the first bitmap (for example, 1 or 0). Optionally, when a value of a bit in the first bitmap is the first value, it indicates that a data unit corresponding to the bit is discarded; and/or when a value of a bit in the first bitmap is a second value (for example, 0 or 1), it indicates that a data unit corresponding to the bit is not discarded (for example, is sent or to be sent). The first value and the second value are different.

Optionally, bits in the first bitmap may correspond, in ascending order of numbers, to the next neighboring number of the 1^{st} number in the M numbers and one or more subsequent numbers. For example, in the first information, the 1^{st} number in the M numbers is 2, and the first bitmap is 1000101. The 1^{st} bit to the 7^{th} bit in the first bitmap respectively correspond to numbers 3 to 9. If the first value is 1, the M numbers may include 2, 3, 7, and 9, that is, data units corresponding to the numbers 2, 3, 7, and 9 are discarded.

For example, in Manner d2, the first information may be shown in FIG. 4C. The 1^{st} number in the M numbers may be indicated by a first discard count (first discard COUNT, FDC) in FIG. 4C. For example, a length of the FDC may be 32 bits. The first bitmap may include a bitmap #1 to a bitmap #N in FIG. 4C, and indicates whether N*8 data units are discarded.

The length of the first bitmap may be related to a length parameter, for example, may be related to N in FIG. 4C. The length parameter may be preset, for example, specified in a protocol, or stored in factory settings or a SIM card of the first apparatus, may be determined by the first apparatus, or may be notified to the first apparatus after being determined by another apparatus (for example, the second apparatus or a core network device). This is not limited in this application. If the length parameter is notified by the another apparatus to the first apparatus, the length parameter may be carried in a semi-static message, for example, an RRC message. In other words, the length parameter may be semi-statically configured. Alternatively, the length parameter may be carried in a dynamic message, for example, DCI or a MAC CE. In other words, the length parameter may be dynamically indicated.

Optionally, when M is larger than or equal to 2, the first information may indicate the first bitmap. In other words, when M is equal to 1, the first information may not indicate the first bitmap.

In Manner d2, the first information can accurately indicate the M numbers corresponding to the M discarded data units. In addition, in this manner, the first information may indicate, through one bit in the first bitmap, whether a number corresponding to the bit belongs to the M numbers, thereby reducing signaling overhead and saving transmission resources. For example, if the first bitmap may occupy 15 bytes, the first bitmap may indicate, at most, that 15*8=120 data units are discarded.

Optionally, the first bitmap may further indicate a status of a data unit in the first apparatus when the first information is constructed, generated, or compiled. For example, the first bitmap may indicate a data unit that does not exist at the first layer of the first apparatus when the first information is constructed, generated, or compiled. For example, when a value of a bit in the first bitmap is the first value, it indicates that a data unit corresponding to the bit is discarded or does not exist; and/or when a value of a bit in the first bitmap is the second value, it indicates that a data unit corresponding to the bit is not discarded (for example, is sent or to be sent). The first value and the second value are different.

**Manner d3:** When the M numbers are consecutive, the first information may indicate a 1^{st} number and a last number in the M numbers, and the 1^{st} number and the last number in the M numbers may be used to determine the M numbers. For example, the first information may include the 1^{st} number and the last number in the M numbers; or the first information may include information that has a correspondence with the 1^{st} number and the last number in the M numbers.

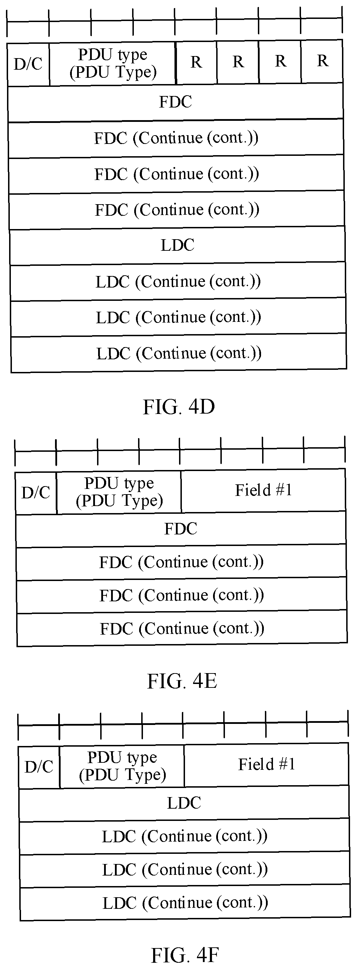

For example, the first information may be shown in FIG. 4D. The 1^{st} number in the M numbers may be indicated by an FDC in FIG. 4D. For example, a length of the FDC may be 32 bits. The last number in the M numbers may be indicated by a last discard count (last discard COUNT, LDC) in FIG. 4D. For example, a length of the LDC may be 32 bits. If the number indicated by the FDC is 1, and the number indicated by the LDC is 6, the M numbers may be 1 to 6.

Optionally, when M is larger than or equal to 2, the first information may indicate the 1^{st} number and the last number in the M numbers.

In Manner d3, when the M numbers are consecutive, the first information may include the 1^{st} number and the last number in the M numbers, and may not include another number in the M numbers, thereby reducing signaling overhead and saving transmission resources.

**Manner d4:** When the M numbers are consecutive, the first information may indicate a 1^{st} number in the M numbers and the value of M, and the 1^{st} number in the M numbers and the value of M are used to determine the M numbers. For example, the first information may include the 1^{st} number in the M numbers and the value of M; or the first information may include information that has a correspondence with the 1^{st} number in the M numbers and the value of M. For example, the first information may include the 1^{st} number in the M numbers and the value of M-1. For another example, the first information may include the 1^{st} number in the M numbers minus 1 and the value of M.

For example, the first information may be shown in FIG. 4E. The 1^{st} number in the M numbers may be indicated by an FDC in FIG. 4E. For example, a length of the FDC may be 32 bits. M may be indicated by a value of a field #1. For specific content of the field #1, refer to the descriptions of the field #1 in Manner d1. Details are not described herein again. If a value of the FDC is 1, the value of the FDC is the 1^{st} number in the M numbers, and M indicated by the field #1 is 6, the M numbers may be 1 to 6. Alternatively, if the value of the FDC is 1, the value of the FDC is the 1^{st} number in the M numbers minus 1, and M indicated by the field #1 is 6, the M numbers may be 2 to 7.

Optionally, when M is larger than or equal to 2, the first information may indicate the 1^{st} number in the M numbers and the value of M.

In Manner d4, when the M numbers are consecutive, the first information may include the 1^{st} number in the M numbers and the value of M, and may not include another number in the M numbers, thereby reducing signaling overhead and saving transmission resources.

**Manner d5:** When the M numbers are consecutive, the first information may indicate a last number in the M numbers and the value of M, and the last number in the M numbers and the value of M are used to determine the M numbers. For example, the first information may include the last number in the M numbers and the value of M; or the first information may include information that has a correspondence with the last number in the M numbers and the value of M. For example, the first information may include the last number in the M numbers and the value of M-1. For another example, the first information may include the last number in the M numbers plus 1 and M.

For example, the first information may be shown in FIG. 4F. The last number in the M numbers may be indicated by an LDC in FIG. 4F. For example, a length of the LDC may be 32 bits. M may be indicated by a value of a field #1. For specific content of the field #1, refer to the descriptions of the field #1 in Manner d1. Details are not described herein again. If a value of the LDC is 6, the value of the LDC is the last number in the M numbers, and M indicated by the field #1 is 6, the M numbers may be 1 to 6. Alternatively, if the value of the LDC is 6, the value of the LDC is the last number in the M numbers plus 1, and M indicated by the field #1 is 6, the M numbers may be 0 to 5.

Optionally, when M is larger than or equal to 2, the first information may indicate the last number in the M numbers and the value of M.

In Manner d5, when the M numbers are consecutive, the first information may include the last number in the M numbers and the value of M, and may not include another number in the M numbers, thereby reducing signaling overhead and saving transmission resources.

Optionally, in Manner d3 to Manner d5, the M data units corresponding to the M numbers may belong to a same PDU set.

**Manner d6:** When the M numbers include P segments of numbers, numbers in each of the P segments of numbers are consecutive, and the P segments of numbers are non-consecutive, the first information may indicate a 1^{st} number and a last number in each of the P segments of numbers, the 1^{st} number and the last number in each of the P segments of numbers may be used to determine the M numbers, and P is an integer larger than or equal to 2. That numbers in each of the P segments of numbers are consecutive may be understood as follows: A 1^{st} number to a last number in an i^{th} segment of numbers among the P segments of numbers are consecutive, or the i^{th} segment of numbers includes only one number, where i is an integer ranging from 1 to P. That the P segments of numbers are non-consecutive may be understood as follows: When i is any integer from 1 to P-1, the last number in the i^{th} segment of numbers among the P segments of numbers and a 1^{st} number in an (i+1)^{th} segment of numbers among the P segments of numbers are non-consecutive or non-adjacent. For example, the first information may include the 1^{st} number and the last number in each of the P segments of numbers; or the first information may include information that has a correspondence with the 1^{st} number and the last number in each of the P segments of numbers.

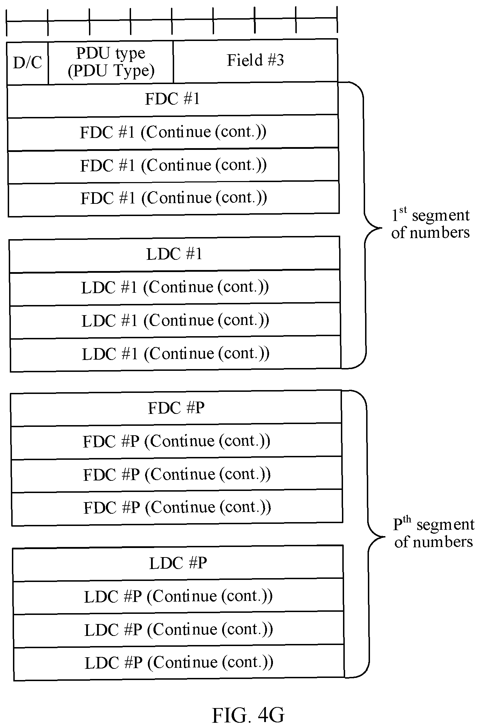

For example, the first information may be shown in FIG. 4G. For the i^{th} segment of numbers among the P segments of numbers, the 1^{st} number in the i^{th} segment of numbers may be indicated by an FDC #i. For example, a length of the FDC #i may be 32 bits, and the last number in the i^{th} segment of numbers may be indicated by an LDC #i. For example, a length of the LDC #i may be 32 bits. i may be an integer ranging from 1 to P. If the first information includes: an FDC #1, an LDC #1, an FDC #2, and an LDC #2, a value of the FDC #1 is 0, the FDC #1 indicates a 1^{st} number in a 1^{st} segment of numbers, a value of the LDC #1 is 2, the LDC #1 indicates a last number in the 1^{st} segment of numbers, a value of the FDC #2 is 6, the FDC #2 indicates a 1^{st} number in a 2^{nd} segment of numbers, a value of the LDC #2 is 8, and the LDC #2 indicates a last number in the 2^{nd} segment of numbers, it indicates that the M numbers include 0 to 2 and 6 to 8.

Optionally, when P is larger than or equal to 2, the first information may indicate the 1^{st} number and the last number in each of the P segments of numbers.

In Manner d6, when the M numbers include the P segments of numbers, the numbers of each of the P segments of numbers are consecutive, and the P segments of numbers are non-consecutive, the first information may include the 1^{st} number and the last number in each of the P segments of numbers, and may not include another number in each segment of numbers, thereby reducing signaling overhead and saving transmission resources.

**Manner d7:** When the M numbers include P segments of numbers, numbers in each of the P segments of numbers are consecutive, and the P segments of numbers are non-consecutive, the first information may indicate a 1^{st} number in each of the P segments of numbers and a quantity of numbers in each segment of numbers, and the 1^{st} number in each of the P segments of numbers and the quantity of numbers in each segment of numbers may be used to determine the M numbers. For example, the first information may include the 1^{st} number in each of the P segments of numbers and the quantity of numbers in each segment of numbers; or the first information may include information that has a correspondence with the 1^{st} number in each of the P segments of numbers and the quantity of numbers in each segment of numbers. For example, for an i^{th} segment of numbers among the P segments of numbers, the first information may include a 1^{st} number in the i^{th} segment of numbers and a quantity of numbers in the i^{th} segment of numbers, or the first information may include the 1^{st} number in the i^{th} segment of numbers and the quantity of numbers in the i^{th} segment of numbers minus 1, where i may be an integer ranging from 1 to P.

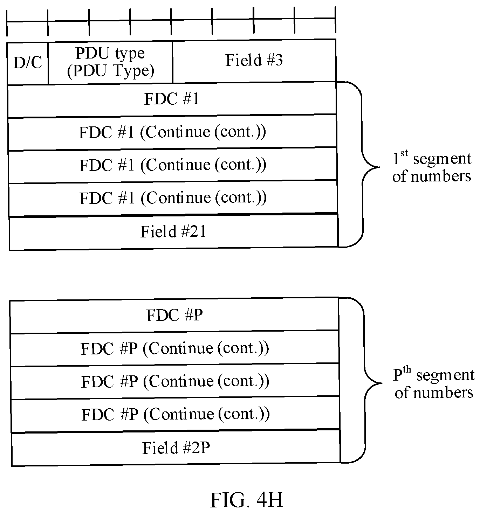

For example, the first information may be shown in FIG. 4H. For the i^{th} segment of numbers among the P segments of numbers, the 1^{st} number in the i^{th} segment of numbers may be indicated by an FDC #i. For example, a length of the FDC #i may be 32 bits, and the quantity of numbers in the i^{th} segment of numbers may be indicated by a field #2i. i may be an integer ranging from 1 to P. If the first information includes: an FDC #1, a field #21, an FDC #2, and a field #22, a value of the FDC #1 is 0, the FDC #1 indicates a 1^{st} number in a 1^{st} segment of numbers, a value of the field #21 is 3, the field #21 indicates a quantity of numbers in the 1^{st} segment of numbers, a value of the FDC #2 is 6, the FDC #2 indicates a 1^{st} number in a 2^{nd} segment of numbers, a quantity indicated by the field #22 is 3, and the field #22 indicates the quantity of numbers in the 2^{nd} segment of numbers, it indicates that the M numbers include 0 to 2 and 6 to 8.

Optionally, when P is larger than or equal to 2, the first information may indicate the 1^{st} number in each of the P segments of numbers and the quantity of numbers in each segment of numbers.

In Manner d7, when the M numbers include the P segments of numbers, the numbers of each of the P segments of numbers are consecutive, and the P segments of numbers are non-consecutive, the first information may include the 1^{st} number in each of the P segments of numbers and the quantity of numbers in each segment of numbers, and may not include another number in each segment of numbers, thereby reducing signaling overhead and saving transmission resources.

**Manner d8:** When the M numbers include P segments of numbers, numbers in each of the P segments of numbers are consecutive, and the P segments of numbers are non-consecutive, the first information may include a last number in each of the P segments of numbers and a quantity of numbers in each segment of numbers, and the last number in each of the P segments of numbers and the quantity of numbers in each segment of numbers may be used to determine the M numbers. For example, the first information may include the last number in each of the P segments of numbers and the quantity of numbers in each segment of numbers; or the first information may include information that has a correspondence with the last number in each of the P segments of numbers and the quantity of numbers in each segment of numbers. For example, for an i^{th} segment of numbers among the P segments of numbers, the first information may include a last number in the i^{th} segment of numbers and a quantity of numbers in the i^{th} segment of numbers, or the first information may include the last number in the i^{th} segment of numbers and the quantity of numbers in the i^{th} segment of numbers minus 1, where i may be an integer ranging from 1 to P.

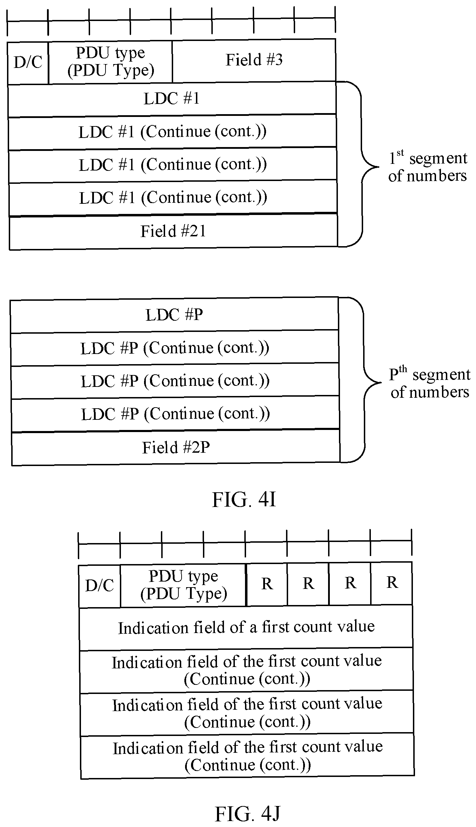

For example, the first information may be shown in FIG. 4I. For the i^{th} segment of numbers among the P segments of numbers, the last number in the i^{th} segment of numbers may be indicated by an LDC #i. For example, a length of the LDC #i may be 32 bits, and the quantity of numbers in the i^{th} segment of numbers may be indicated by a field #2i. i may be an integer ranging from 1 to P. If the first information includes: an LDC #1, a field #21, an LDC #2, and a field #22, a value of the LDC #1 is 2, the LDC #1 indicates a last number in a 1^{st} segment of numbers, a value of the field #21 is 3, the field #21 indicates a quantity of numbers in the 1^{st} segment of numbers, a value of the LDC #2 is 8, the LDC #2 indicates a last number in a 2^{nd} segment of numbers, a value of the field #22 is 3, and the field #22 indicates a quantity of numbers in the 2^{nd} segment of numbers, it indicates that the M numbers include 0 to 2 and 6 to 8.

Optionally, when P is larger than or equal to 2, the first information may indicate the last number in each of the P segments of numbers and the quantity of numbers in each segment of numbers.

In Manner d8, when the M numbers include the P segments of numbers, the numbers of each of the P segments of numbers are consecutive, and the P segments of numbers are non-consecutive, the first information may include the last number in each of the P segments of numbers and the quantity of numbers in each segment of numbers, and may not include another number in each segment of numbers, thereby reducing signaling overhead and saving transmission resources.

Optionally, in Manner d6 to Manner d8, the first information may further include a field #3, and a value of the field #3 may indicate P. For example, the value of the field #3 is P or P-1. For example, when the field #3 includes four bits, the field #3 may indicate 16 or 17 segments of numbers at most. The field #3 may be named in a plurality of manners, for example, a quantity of groups of discard counts. This is not limited in this application.

Optionally, the count value in Manner d1 to Manner d8 may be replaced with a sequence number. In this way, overhead in the first information can be further reduced, and transmission resources can be saved.

**Manner c2:** The first information may indicate a first count value. The first count value may be determined based on the first number (for example, a count value or an SN corresponding to the count value) corresponding to the first data unit.

In some examples, if only one data unit is discarded, that is, only the first data unit is discarded, the first count value may be the count value corresponding to the first data unit plus 1. For example, if only the first data unit is discarded, and the number corresponding to the first data unit is 3, the first count value may be 3 + 1 = 4.

In some other examples, if M data units are discarded, the first count value may be a count value #1 plus 1. The count value #1 may be a largest count value corresponding to the M data units, and the M data units may include the first data unit. For example, if all data units corresponding to numbers 0 to 6 are discarded, the count value #1 may be 6, and the first count value may be 6 + 1 = 7. Optionally, the M discarded data units may be M data units with consecutive numbers.

The first information may indicate the first count value in a plurality of manners. In some examples, the first information may explicitly indicate the first count value. For example, the first information may include the first count value. For example, the first information may be shown in FIG. 4J. The first count value may be indicated by an indication field of the first count value in FIG. 4J. A length of the indication field of the first count value may be 32 bits. In some other examples, the first information may implicitly indicate the first count value. For example, the first information may include information that has a correspondence with the first count value. For example, the first information includes an SN corresponding to the first count value; or the first information may include the first count value minus 1.

In Manner c2, the first information can accurately indicate the first count value.

Optionally, in Manner c1 and Manner c2, the first information may be control information. For example, the first information may be a PDCP control PDU.

**Manner c3:** The first information may include a first header, the first header may include first indication information, and the first indication information may indicate that the first data unit is discarded.

Optionally, if the first information is the information shown in Manner c3, in S302, when the first data unit is discarded, the first apparatus may send the first information; or an implementation of S302 may be the foregoing Manner b5.

In some possible manners, if the first information is a first-type data packet, and the first indication information includes the first number corresponding to the first data unit, it indicates that the first data unit is discarded.

If the first information meets the following condition #a or condition #b, the first information is the first-type data packet.

Condition #a: The first information includes a first header but does not include a data part. In other words, a data amount in the first information is 0. For example, the first information is a PDCP PDU that includes only a PDCP header (PDCP header).

Condition #b: The first information may include a first header and second indication information. The second indication information may include a padding bit. For example, the first information may be a data unit, and the data unit includes the first header and the second indication information. For example, the first information is a PDCP PDU, and the PDCP PDU includes a PDCP header (PDCP header) and a PDCP SDU used as the second indication information. The PDCP SDU includes a padding bit. Optionally, the first apparatus (for example, the first PDCP entity in the first apparatus) may perform ciphering and/or integrity protection on the PDCP SDU; or may not perform ciphering and/or integrity protection on the PDCP SDU, thereby reducing complexity.

A quantity of padding bits may be preset, for example, specified in a protocol, or stored in factory settings or a SIM card of the first apparatus, may be determined by the first apparatus, or may be notified to the first apparatus after being determined by another apparatus (for example, the second apparatus or a core network device). This is not limited in this application.

Optionally, the quantity of padding bits in the second indication information may be less than a size of an SDU in the first data unit, thereby saving transmission resources.

Because the first-type data packet may not include actual data, the first-type data packet may also be referred to as a dummy packet (dummy packet). In this manner, the first-type data packet is sent to indicate that the first data unit is discarded, so that transmission resources can be saved.

Optionally, the first header may further include information #1, and the information #1 indicates that the first information is the first-type data packet. For example, if a value of the information #1 is a third value, it indicates that the first information is the first-type data packet. For example, the information #1 is 1-bit information, and the third value is 1.

In some possible manners, if the first information indicates that a data unit is discarded, the first apparatus may not allocate a number corresponding to the discarded data unit to a subsequent data unit. For example, if the first information indicates that the first data unit is discarded, the first apparatus may not allocate the first number corresponding to the first data unit to a subsequent data unit. For another example, if the first information indicates that M data units are discarded, the first apparatus may not allocate M numbers corresponding to the M data units to subsequent data units. In this manner, a case in which one number corresponds to a plurality of data units can be avoided on a second apparatus side, so that the second apparatus can be prevented from confusing numbers of data units.

Optionally, the method shown in FIG. 3 may further include S303.

**S303:** The second apparatus processes a received data unit based on the first information.

In some possible manners, the first information may indicate that M data units are discarded, and the M data units may include the first data unit. The second apparatus may consider the discarded data units indicated by the first information as received, or may skip the discarded data units, and process the received data unit. Optionally, that the second apparatus considers the discarded data unit indicated by the first information as received may also be understood as that the second apparatus may consider the discarded data unit indicated by the first information as received and/or submitted to an upper layer of a third layer (for example, a PDCP layer) in the second apparatus.

Optionally, when a count value #a is a count value #d, the second apparatus (for example, an entity corresponding to the third layer in the second apparatus) may deliver at least one data unit starting from a count value #d+1 in the reception buffer to the upper layer of the third layer. For specific content of the count value #a, refer to the descriptions of the count value #a in the foregoing descriptions of the terms. Details are not described herein again. The count value #d may be determined based on the M discarded data units indicated by the first information. For example, the count value #d may be a count value corresponding to one of the M data units. The at least one data unit may be data units with consecutive numbers. Optionally, the at least one data unit may include: a data unit in the reception buffer, and/or all or part of the M data units. For example, if the first information indicates that PDCP SDUs corresponding to count values 0 to 2 and 6 to 8 are discarded, the reception buffer includes PDCP SDUs corresponding to count values 3 to 5 and 9 to 11, and the count value #a is 0, the at least one data unit starting from the count value #d+1 in the reception buffer may include the PDCP SDUs corresponding to the count values 3 to 11.

In some examples, the first information may be shown in the foregoing Manner c1, where the first information may indicate that the M data units are discarded. The second apparatus may consider the M data units as received data units, and process the received data units, for example, submit the received data units to the upper layer of the third layer. Optionally, that the second apparatus considers the M data units as received data units may be understood as that the second apparatus may consider the M data units as data units that are received and/or that are submitted to the upper layer of the third layer.

For example, as shown in FIG. 2A, the first apparatus discards the PDCP SDUs corresponding to the count values 0 to 6, and sequentially sends the PDCP PDUs corresponding to the count values 7 to 19. The first apparatus may send the first information to the second apparatus, where the first information may indicate that the PDCP SDUs corresponding to the count values 0 to 6 are discarded. A second PDCP entity in the second apparatus may consider the PDCP SDUs corresponding to the count values 0 to 6 as received, and update the count value #a to 7. In this way, the second PDCP entity can deliver the PDCP PDUs corresponding to the count values 7 to 19 to an upper layer of a PDCP layer without waiting for the reordering timer to expire, thereby reducing transmission delays of the PDCP PDUs corresponding to the count values 7 to 19.

For another example, as shown in FIG. 2B, the first apparatus discards the PDCP SDUs corresponding to the count values 0 to 2 and 6 to 8, and sequentially sends the PDCP PDUs corresponding to the count values 3 to 5 and 9 to 11. The first apparatus may send the first information to the second apparatus, where the first information may indicate that the PDCP SDUs corresponding to the count values 0 to 2 and 6 to 8 are discarded. The second PDCP entity in the second apparatus may consider the PDCP SDUs corresponding to the count values 0 to 2 and 6 to 8 as received, and update the count value #a to 3. In this way, the second PDCP entity may deliver the PDCP PDUs corresponding to the count values 3 to 5 to the upper layer of the PDCP layer without waiting for the reordering timer to expire, and update the count value #a to 6. Because the second PDCP entity may consider the PDCP SDUs corresponding to the count values 6 to 8 as received, the second PDCP entity may update the count value #a to 9. In this way, the second PDCP entity can deliver PDCP PDUs corresponding to the count values 9 to 11 to the upper layer of the PDCP layer without waiting for the reordering timer to expire. In this example, transmission delays of the PDCP PDUs corresponding to the count values 3 to 5 and 9 to 11 can be reduced.

In some other examples, the first information may be shown in the foregoing Manner c3, and the first information may indicate that the first data unit is discarded. In this case, the second apparatus may consider the first data unit as a data unit that is received and/or is submitted to the upper layer, or skip the first data unit and process a received data unit.

For example, as shown in FIG. 2A, the first apparatus discards the PDCP SDUs corresponding to the count values 0 to 6, and sequentially sends the PDCP PDUs corresponding to the count values 7 to 19. The first apparatus may send seven pieces of first information, to respectively indicate that the PDCP SDUs corresponding to the count values 0 to 6 are discarded. The second PDCP entity in the second apparatus may consider the PDCP SDUs corresponding to the count values 0 to 6 as received, and update the count value #a to 7. In this way, the second PDCP entity can deliver the PDCP PDUs corresponding to the count values 7 to 19 to an upper layer of a PDCP layer without waiting for the reordering timer to expire, thereby reducing transmission delays of the PDCP PDUs corresponding to the count values 7 to 19.

For another example, as shown in FIG. 2B, the first apparatus discards the PDCP SDUs corresponding to the count values 0 to 2 and 6 to 8, and sequentially sends the PDCP PDUs corresponding to the count values 3 to 5 and 9 to 11. The first apparatus may send six pieces of first information to the second apparatus, to respectively indicate that the PDCP SDUs corresponding to the count values 0 to 2 and 6 to 8 are discarded. The second PDCP entity in the second apparatus may consider the PDCP SDUs corresponding to the count values 0 to 2 and 6 to 8 as received, and update the count value #a to 3. In this way, the second PDCP entity may deliver the PDCP PDUs corresponding to the count values 3 to 5 to the upper layer of the PDCP layer without waiting for the reordering timer to expire, and update the count value #a to 6. Because the second PDCP entity may consider the PDCP SDUs corresponding to the count values 6 to 8 as received, the second PDCP entity may update the count value #a to 9. In this way, the second PDCP entity can deliver PDCP PDUs corresponding to the count values 9 to 11 to the upper layer of the PDCP layer without waiting for the reordering timer to expire. In this example, transmission delays of the PDCP PDUs corresponding to the count values 3 to 5 and 9 to 11 can be reduced.

Optionally, in this example, if the first information further includes information #1, and the information #1 indicates that the first information is a first-type data packet, the second apparatus may not deliver the first information to the upper layer of the PDCP layer. For example, if the first information further includes the information #1, the second PDCP entity in the second apparatus may discard the first information after performing integrity verification and deciphering on the first information.

Optionally, in this manner, if a count value of a discarded data unit indicated by the first information is larger than or equal to the count value #a, the second apparatus may consider the discarded data unit indicated by the first information as received, or skip the discarded data unit and process a received data unit; and/or if a count value of a discarded data unit indicated by the first information is less than the count value #a, the second apparatus may skip the discarded data unit. In other words, if a largest count value corresponding to the discarded data unit indicated by the first information is less than the count value #a, the second apparatus may ignore the first information. For example, the first information may indicate that the PDCP SDUs corresponding to the count values 0 to 2 and 6 to 8 are discarded. If the second apparatus determines, when receiving the first information, that the count value #a is 3, the second apparatus may skip the PDCP SDUs corresponding to the count values 0 to 2, and consider the PDCP SDUs corresponding to the count values 6 to 8 as received.

In some implementations, after receiving the first information, the second apparatus (for example, the entity corresponding to the third layer in the second apparatus) updates the count value #a. For example, the second apparatus may update the count value #a to a count value #a1. For specific content of the count value #a1, refer to the descriptions of the count value #a1 in the foregoing descriptions of the terms. Details are not described herein again. For another example, the second apparatus may update the count value #a to a count value #a2 or a count value #a2+1, where the count value #a2 may be a largest number corresponding to M data units, and the M data units may be discarded data units indicated by the first information. For another example, the second apparatus may update the count value #a to a count value #a3. The count value #a3 may be a smallest count value corresponding to a data unit in a data unit set #1. Any data unit in the data unit set #1 is not submitted to the upper layer of the third layer, and does not belong to the M discarded data units indicated by the first information. A count value corresponding to any data unit in the data unit set #1 is larger than the count value #a.

Optionally, after updating the count value #a, the second apparatus may process the reordering timer based on an updated count value #a. Specific content of the processing is not limited in this application.

In some other implementations, if the first information indicates that M data units are discarded, the first apparatus may update a count value #b based on the M data units. For specific content of the count value #b, refer to the descriptions of the count value #b in the foregoing descriptions of the terms. Details are not described herein again.

In some examples, if the count value #b is less than a largest count value corresponding to the M data units plus 1, the second apparatus may update the count value #b to the largest count value corresponding to the M data units plus 1. For example, if the first information indicates that the PDCP SDUs corresponding to the count values 0 to 2 and 6 to 8 are discarded, and the count value #b is less than 8 + 1 = 9, the second apparatus may update the count value #b to 9.

In some other examples, the second apparatus may update the count value #b to the largest count value corresponding to the M data units plus 1. For example, if the first information indicates that the PDCP SDUs corresponding to the count values 0 to 2 and 6 to 8 are discarded, the second apparatus may update the count value #b to 9.

In some other possible manners, the first information may be shown in the foregoing Manner c2, and the first information may indicate the first count value. The second apparatus may update a count value #a to the first count value, and process a received data unit based on the count value #a. For specific content of the count value #a, refer to the descriptions of the count value #a in the foregoing descriptions of the terms. Details are not described herein again. Because the count value #a may be a lower boundary of a reordering window, this manner may be understood as adjusting the lower boundary of the reordering window.

For example, as shown in FIG. 2A, the first apparatus discards the PDCP SDUs corresponding to the count values 0 to 6, and sequentially sends the PDCP PDUs corresponding to the count values 7 to 19. The first apparatus sends the first information to the second apparatus, where the first count value indicated by the first information may be 7. In this way, after receiving the PDCP PDU corresponding to the count value 7, the second apparatus may update the count value #a to 7, and deliver the PDCP PDUs corresponding to the count values 7 to 19 to the upper layer of the PDCP layer, thereby reducing transmission delays of the PDCP PDUs corresponding to the count values 7 to 19.

In this manner, the first apparatus indicates the first count value to the second apparatus, and the second apparatus may process a received data unit, thereby reducing a transmission delay of the received data unit. In this manner, signaling overhead can be further reduced, and transmission resources can be further saved.

In some possible manners, the second apparatus may further adjust the reordering timer based on the first information.

In some implementations, the second apparatus may adjust a duration of the reordering timer based on the first information. Optionally, the second apparatus may shorten the duration of the reordering timer after receiving the first information. For example, the second apparatus may shorten the duration of the reordering timer within a second duration after receiving the first information. An adjusted duration of the reordering timer and/or the second duration may be preset, for example, specified in a protocol, or stored in factory settings or a SIM card of the second apparatus, may be determined by the second apparatus, or may be notified to the second apparatus after being determined by another apparatus (for example, the first apparatus or a core network device). This is not limited in this application. Optionally, if the adjusted duration of the reordering timer and/or the second duration is notified by the another apparatus to the second apparatus, the adjusted duration and/or the second duration may be semi-statically configured, or may be dynamically configured.

In some other implementations, the second apparatus may disable the reordering timer based on the first information. Disabling the reordering timer may be understood as that the reordering timer expires, or may be understood as changing the duration of the reordering timer to 0. Optionally, the second apparatus may disable the reordering timer after receiving the first information. For example, the second apparatus may disable the reordering timer within a third duration after receiving the first information. The third duration may be preset, for example, specified in a protocol, or stored in factory settings or a SIM card of the second apparatus, may be determined by the second apparatus, or may be notified to the second apparatus after being determined by another apparatus (for example, the first apparatus or a core network device). This is not limited in this application. Optionally, the third duration is notified by the another apparatus to the second apparatus, and the third duration may be semi-statically configured, or may be dynamically configured.

In some possible manners, the method shown in FIG. 3 further includes step E1:
**Step E1:** When the first information is submitted (submit) to a second layer, the first apparatus may start or restart a second timer. During running of the second timer, the first information is not submitted to the second layer (or triggered). In other words, a condition for sending or triggering the first information may further include: The second timer is not running, and the second timer is started or restarted when the first information is submitted to the second layer.

The second layer may be a lower layer (lower layer(s)) of the first layer. In other words, the second layer is lower than the first layer. For example, the second layer may be an RLC layer, and the first layer may be a PDCP layer.

A duration of the second timer may be preset, for example, specified in a protocol, or stored in factory settings or a SIM card of the first apparatus, may be determined by the first apparatus, or may be notified to the first apparatus after being determined by another apparatus (for example, the second apparatus or a core network device). This is not limited in this application.

The second timer and the first timer may be a same timer, or may be different timers. This is not limited in this application.

A sequence of performing S303 and step E1 is not limited in this application.

According to the method, within a specific duration after the first information is submitted to the second layer, the first apparatus does not trigger or send the first information, so that the first apparatus can be prevented from frequently triggering or sending the first information, thereby reducing signaling overhead and saving transmission resources.

It should be understood that the foregoing uses the first data unit as an example for description. The first apparatus and the second apparatus may also process other data units in a similar manner. For example, the method shown in FIG. 3 may further include step F1 to step F3.

**Step F1:** The first apparatus further receives a third data unit at the first layer.

The third data unit may correspond to a third number. Optionally, the third number may be allocated by the first apparatus to the third data unit. For example, the third number may be allocated by the first entity to the third data unit. In this application, the third number may be a count value or an SN. Therefore, for specific content of allocating the third number to the third data unit by the first entity, refer to the descriptions of "allocating the count value and the SN to the PDCP SDU" in the foregoing descriptions of the terms. The only difference is that the first PDCP entity is replaced with the first entity, and the PDCP SDU is replaced with the third data unit. Details are not described herein again.

The third number is smaller than the second number corresponding to the second data unit, and is larger than the first number corresponding to the first data unit. For example, the first number is 1, the third number is 2, and the second number is 3.

A sequence of performing S301 and step F1 is not limited in this application. For example, the first apparatus may sequentially receive, at the first layer, the first data unit, the third data unit, and the second data unit.

**Step F2:** When the third data unit is discarded, the first apparatus may send third information; and correspondingly, the second apparatus receives the third information. The third information may indicate that a data unit is discarded.

For specific content of step F2, refer to S302. The only difference is that the first data unit is replaced with the third data unit, and the first information is replaced with the third information. Details are not repeated.

**Step F3:** The second apparatus processes a received data unit based on the third information.

For specific content of step F3, refer to S303. The only difference is that the first data unit is replaced with the third data unit, and the first information is replaced with the third information. Details are not described herein again.

Optionally, the first information and the third information may be different information. In this way, each time a data unit is discarded, the first apparatus may send a piece of information indicating that a data unit is discarded. In this manner, the second apparatus can be notified in time that a data unit is discarded.

According to the method shown in FIG. 3, when the first data unit is discarded, the first apparatus may send the first information, where the first information may indicate that a data unit is discarded. In this way, the second apparatus that receives the first information may process a received data unit based on the first information, thereby avoiding or reducing impact on the processing of the received data unit by the second apparatus.

Based on a same technical idea as the foregoing method embodiments, an embodiment of this application provides a corresponding communication apparatus that can have a function of performing related steps in the foregoing method embodiments. The function may be implemented by hardware, may be implemented by software, or may be implemented by hardware by executing corresponding software. The hardware or the software includes one or more modules corresponding to the function. The communication apparatus may be a terminal, or may be a module (for example, a circuit or a chip) in a terminal, or may be a logical node, a logical module, or software that can implement all or part of functions of a terminal or an access network device. Alternatively, the communication apparatus may be an access network device or a module (for example, a circuit or a chip) in an access network device, or may be a logical node, a logical module, or software that can implement all or part of functions of an access network device.

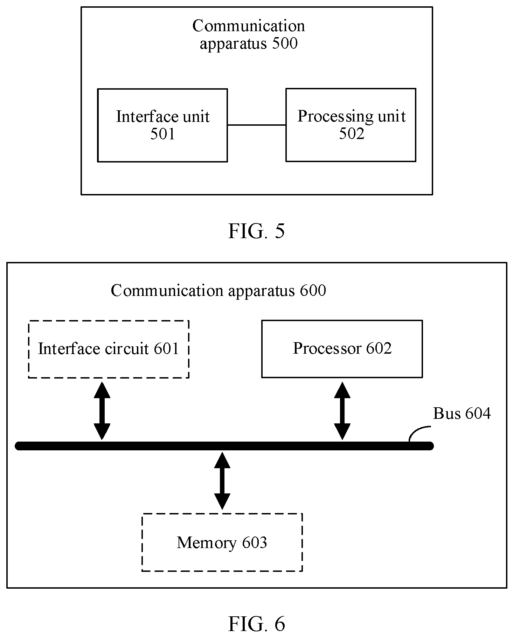

In a possible implementation, a structure of the communication apparatus provided in this embodiment of this application is shown in FIG. 5, and the communication apparatus includes a processing unit 502. Optionally, the communication apparatus further includes an interface unit 501. The following describes functions of various units in the communication apparatus 500.

The interface unit 501 is configured to input and/or output information. Inputting information may be replaced with receiving information, and outputting information may be replaced with sending information. When outputting the information, the interface unit 501 may output the information to an apparatus other than the communication apparatus 500, or may output the information to another unit in the communication apparatus 500. In some manners, the interface unit 501 may be implemented by using at least one of a physical interface, a communication module, a communication interface, and an input/output interface. In some other manners, the interface unit 501 may be implemented by using an interface circuit, for example, a mobile communication module. The mobile communication module may include one or more of at least one antenna, at least one filter, a switch, a power amplifier, a low noise amplifier (low noise amplifier, LNA), and the like.

The processing unit 502 may be configured to support the communication apparatus 500 in performing processing actions in the foregoing method embodiments. The processing unit 502 may be implemented by using one or more processors. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

In an implementation, the communication apparatus 500 is used in the first apparatus in embodiments of this application shown in FIG. 3. The following describes a specific function of the processing unit 502 in this implementation.

The processing unit 502 is configured to: receive, at a first layer, a first data unit and a second data unit, where the first data unit corresponds to a first number, the second data unit corresponds to a second number, and the second number is larger than the first number; and when the first data unit is discarded, send first information through the interface unit 501, where the first information indicates that a data unit is discarded.

In some possible manners, the processing unit 502 is specifically configured to: when the first data unit is discarded, start or restart a first timer; and when the first timer expires, send the first information through the interface unit 501.

Optionally, the processing unit 502 is specifically configured to: when the first timer expires, and there is no data unit corresponding to the first number within an entire duration of the first timer, send the first information through the interface unit 501.

In some implementations, the processing unit 502 is further configured to: further receive a third data unit at the first layer, where the third data unit corresponds to a third number, and the third number is smaller than the second number and larger than the first number; and when the third data unit is discarded, send third information through the interface unit 501, where the third information indicates that a data unit is discarded.

In some other possible manners, the processing unit 502 is specifically configured to: when the first data unit is discarded and a quantity of discarded data units is larger than or equal to a first threshold, send the first information through the interface unit 501.

In some implementations, the processing unit 502 is further configured to: when the first information is submitted to a second layer, start or restart a second timer, where the first information is not submitted to the second layer during running of the second timer.

In still some possible manners, the processing unit 502 is specifically configured to: when the first data unit is discarded, and the first data unit belongs to a first data unit set, send the first information through the interface unit 501.

In still some possible manners, the processing unit 502 is specifically configured to: when the first data unit is discarded, and the second data unit is sent or to be sent, send the first information through the interface unit 501.

For more detailed descriptions of the processing unit 502 and the interface unit 501, refer to related descriptions in the method embodiments shown in FIG. 3. Details are not described herein again.

It should be noted that, in the foregoing embodiments of this application, division into the modules is an example, is merely logical function division, and may have other divisions during actual implementation. In addition, functional units in embodiments of this application may be integrated into one processing unit, may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such understanding, a part of the technical solutions of this application that essentially makes contributions, or all or part of the technical solutions, may be implemented in the form of a software product. The computer software product is stored in a storage medium and includes several instructions for instructing a computer device (which may be a personal computer, a server, a network device) or a processor (processor) to perform all or part of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In a possible implementation, for a communication apparatus provided in an embodiment of this application, refer to FIG. 6. The communication apparatus 600 includes a processor 602. Optionally, the communication apparatus 600 further includes an interface circuit 601 and a memory 603. The interface circuit 601, the processor 602, and the memory 603 are coupled to each other.

Optionally, the interface circuit 601, the processor 602, and the memory 603 are coupled to each other through a bus 604. The bus 604 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one thick line is used to represent the bus in FIG. 6, but this does not mean that there is only one bus or only one type of bus.

The interface circuit 601 is configured to input and/or output information. Inputting information may be replaced with receiving information, and outputting information may be replaced with sending information. When outputting the information, the interface circuit 601 may output the information to an apparatus other than the communication apparatus 600, or may output the information to another unit in the communication apparatus 600. For example, the interface circuit 601 may be implemented by using at least one of a physical interface, a communication module, a communication interface, an input/output interface, and a mobile communication module. The mobile communication module may include one or more of at least one antenna, at least one filter, a switch, a power amplifier, an LNA, and the like.

The processor 602 may be configured to support the communication apparatus 600 in performing processing actions in the foregoing method embodiments. When the communication apparatus 600 is configured to implement the foregoing method embodiments, the processor 602 may be further configured to implement the functions of the processing unit 502. The processor 602 may be a CPU, or may be another general-purpose processor, a DSP, an ASIC, an FPGA or another programmable logic device, a transistor logic device, a hardware component, or any combination thereof. The general-purpose processor may be a microprocessor or any regular processor.

In an implementation, the communication apparatus 600 is used in the first apparatus in embodiments of this application shown in FIG. 3. The following describes a specific function of the processor 602 in this implementation.

The processor 602 is configured to: receive, at a first layer, a first data unit and a second data unit, where the first data unit corresponds to a first number, the second data unit corresponds to a second number, and the second number is larger than the first number; and when the first data unit is discarded, send first information through the interface circuit 601, where the first information indicates that a data unit is discarded.

For the specific function of the processor 602, refer to the descriptions in the communication method provided in the foregoing embodiments of this application and the instances, and the descriptions of the specific functions of the communication apparatus 500 in the embodiment of this application shown in FIG. 5. Details are not described herein again.

The memory 603 is configured to store program instructions, data, and/or the like. Specifically, the program instructions may include program code, and the program code includes computer operation instructions. The memory 603 may include a RAM, and may further include a non-volatile memory (non-volatile memory), for example, at least one disk memory. The processor 602 executes the program instructions stored in the memory 603, and uses the data stored in the memory 603, to implement the foregoing function, to implement the communication method provided in the foregoing embodiments of this application. The memory 603 may be integrated with the processor 602, or may be a memory outside the communication apparatus.

It may be understood that the memory 603 in FIG. 6 of this application may be a volatile memory or a non-volatile memory, or may include both a volatile memory and a non-volatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and is used as an external cache. By way of example, and not limitation, many forms of RAM may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

Based on the foregoing embodiments, an embodiment of this application further provides a computer program product including computer-executable instructions. When the computer program product is run, the method provided in the foregoing embodiments is performed.

Based on the foregoing embodiments, an embodiment of this application further provides a computer-readable storage medium. The computer-readable storage medium stores a computer program. When the computer program is executed by a computer, the computer is caused to perform the method provided in the foregoing embodiments.

The storage medium may be any usable medium that can be accessed by the computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer.

Based on the foregoing embodiments, an embodiment of this application further provides a chip. The chip is configured to read a computer program stored in a memory, to implement the method provided in the foregoing embodiments.

Based on the foregoing embodiments, an embodiment of this application provides a chip system. The chip system includes a processor, configured to support a computer apparatus in implementing functions related to devices in the foregoing embodiments. In a possible design, the chip system further includes a memory, and the memory is configured to store a program and data that are necessary for the computer apparatus. The chip system may include a chip, or may include a chip and another discrete component.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

The computer program instructions may be stored in a computer-readable memory that enables the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

In this application, "at least one" means one or more, and "a plurality of" means two or more. The term "and/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" generally indicates an "or" relationship between associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

It is clear that a person skilled in the art can make various modifications and variations to this application without departing from the scope of this application. In this case, this application is intended to cover these modifications and variations of this application provided that they fall within the scope of the claims of this application and equivalent technologies thereof.

## Claims

**1.** A communication method, comprising:
receiving, at a first layer, a first data unit and a second data unit, wherein the first data unit corresponds to a first number, the second data unit corresponds to a second number, and the second number is larger than the first number; and
triggering first information when the first data unit is discarded, wherein the first information indicates that a data unit is discarded.

**2.** The method according to claim 1, wherein the first data unit is not submitted by a second layer to a lower layer of the second layer, and the second layer is a lower layer of the first layer.

**3.** The method according to claim 1 or 2, further comprising:
discarding the first data unit when a discard timer corresponding to the first data unit expires.

**4.** The method according to any one of claims 1 to 3, wherein triggering the first information when the first data unit is discarded comprises:
triggering the first information when the first data unit is discarded and the second data unit is not discarded.

**5.** The method according to any one of claims 1 to 4, wherein the first information indicates that M data units are discarded, the M data units comprise the first data unit, and M is a positive integer.

**6.** The method according to claim 5, wherein the first information indicates M numbers, and the M numbers are numbers corresponding to the M data units.

**7.** The method according to claim 6, wherein the first information comprises a smallest number in the M numbers, or the first information comprises the 1^{st} number in the M numbers.

**8.** The method according to claim 7, wherein when M is larger than 1, the first information further comprises a first bitmap, a 1^{st} bit in the first bitmap corresponds to a next neighboring number of the 1^{st} number in the M numbers, and last M-1 numbers in the M numbers are determined based on bits whose values are a first value in the first bitmap.

**7.** The method according to claim 6, wherein that the last M-1 numbers in the M numbers are determined based on the bits whose values are the first value in the first bitmap comprises:
when a value of a bit in the first bitmap is the first value, a data unit corresponding to the bit is discarded; and/or when a value of a bit in the first bitmap is a second value, a data unit corresponding to the bit is not discarded, wherein the first value and the second value are different.

**10.** The method according to claim 8 or 9, wherein bits in the first bitmap correspond, in ascending order of numbers, to the next neighboring number of the 1^{st} number in the M numbers and one or more subsequent numbers.

**11.** The method according to any one of claims 1 to 4, wherein that the first information indicates that the data unit is discarded comprises:
the first information indicates a first count value, and the first count value is determined based on the first number.

**12.** The method according to any one of claims 1 to 11, further comprising:
submitting the first information to the lower layer of the first layer.

**13.** The method according to any one of claims 1 to 12, wherein the first data unit and/or the second data unit is a service data unit SDU or a protocol data unit PDU.

**14.** The method according to claim 2, wherein the first layer comprises a packet data convergence protocol PDCP layer, and the second layer comprises a radio link control RLC layer.

**15.** A communication method, comprising:
receiving first information, wherein the first information indicates that a data unit is discarded; and
determining the discarded data unit based on the first information.

**16.** The method according to claim 15, wherein the first information indicates that M data units are discarded, and M is a positive integer.

**17.** The method according to claim 16, wherein the first information indicates M numbers, and the M numbers are numbers corresponding to the M data units.

**18.** The method according to claim 17, wherein the first information comprises a smallest number in the M numbers, or the first information comprises a 1^{st} number in the M numbers.

**19.** The method according to claim 18, wherein when M is larger than 1, the first information further comprises a first bitmap, a 1^{st} bit in the first bitmap corresponds to a next neighboring number of the 1^{st} number in the M numbers, and last M-1 numbers in the M numbers are determined based on bits whose values are a first value in the first bitmap.

**20.** The method according to claim 19, wherein that the last M-1 numbers in the M numbers are determined based on the bits whose values are the first value in the first bitmap comprises:
when a value of a bit in the first bitmap is the first value, a data unit corresponding to the bit is discarded; and/or when a value of a bit in the first bitmap is a second value, a data unit corresponding to the bit is not discarded, wherein the first value and the second value are different.

**21.** The method according to any one of claims 16 to 20, further comprising:
when a value of a first variable is less than or equal to a largest count value corresponding to the M data units, updating the value of the first variable to the largest count value corresponding to the M data units plus 1, wherein the first variable indicates a count value corresponding to a next expected data unit to be received.

**22.** The method according to any one of claims 16 to 21, further comprising:
when a value of a second variable is equal to a second count value, delivering at least one data unit starting from the value of the second variable plus 1 to an upper layer of a third layer, wherein the second variable indicates a smallest count value in count values corresponding to data units that are not delivered to the upper layer of the third layer and are still waiting to be received, the second count value is a count value corresponding to one of the M data units, one or more numbers of the at least one data unit are consecutive, and the at least one data unit comprises: a data unit in a reception buffer, and/or all or part of the M data units.

**23.** The method according to claim 22, further comprising:
updating the value of the second variable to a third count value, wherein the third count value is a smallest count value corresponding to a data unit in a data unit set, any data unit in the data unit set is not submitted to the upper layer of the third layer and does not belong to the M data units, and any data unit in the data unit set has a corresponding count value larger than the value of the second variable before update.

**24.** The method according to claim 22 or 23, wherein the third layer comprises a packet data convergence protocol PDCP layer.

**25.** A communication apparatus, configured to implement the method according to any one of claims 1 to 14.

**26.** The communication apparatus according to claim 25, wherein the communication apparatus comprises user equipment or a chip.

**27.** A communication apparatus, configured to implement the method according to any one of claims 15 to 24.

**28.** A computer-readable storage medium, wherein the computer-readable storage medium stores a computer program or instructions; and when the computer program or the instructions are executed, the method according to any one of claims 1 to 24 is implemented.

**29.** A computer program product, wherein the computer program product comprises computer program instructions or code; and when the computer program instructions or the code is run, the method according to any one of claims 1 to 24 is implemented.
